# EUROPEAN PATENT SPECIFICATION

(11) **EP 2 861 545 B1**
(45) Date of publication and mention of the grant of the patent: **26.06.2019**
(21) Application number: 13727706.7
(22) Date of filing: 15.05.2013
(51) Int. Cl.: C04B 35/111, B24D 3/14, C04B 35/117, C09K 3/14

(54) **ABRASIVE PARTICLES, ABRASIVE ARTICLES, AND METHODS OF MAKING AND USING THE SAME**
SCHLEIFTEILCHEN, SCHLEIFGEGENSTÄNDE UND VERFAHREN ZUR HERSTELLUNG UND VERWENDUNG DAVON
PARTICULES ABRASIVES, ARTICLES ABRASIFS, ET PROCÉDÉS DE FABRICATION ET D'UTILISATION DE CEUX-CI

(30) Priority: 13.06.2012 US 201213495593
(43) Date of publication of application: 22.04.2015
(73) Proprietor: 3M Innovative Properties Company, St. Paul, MN 55133-3427 (US)
(72) Inventor: MONROE, Larry D., Saint Paul, Minnesota 55133-3427 (US)
(74) Representative: Vossius & Partner Patentanwälte Rechtsanwälte mbB
(86) International application number: PCT/US2013/041174
(87) International publication number: WO 2013/188038

(56) References cited:
- EP-A1- 0 603 715
- GB-A- 2 099 012
- US-A- 4 518 397
- US-A- 4 623 364
- US-A- 5 387 268
- US-A- 5 908 478

## Description

### FIELD

The present disclosure relates to abrasive particles and methods of making the same. The abrasive particles can be incorporated into a variety of abrasive articles, including bonded abrasives, coated abrasives, nonwoven abrasives, and abrasive brushes.

### BACKGROUND

Alpha-alumina is widely used as an abrasive material in the abrasives industry. It may be used in a pure form, or more preferably in a form containing additives that enhance its abrasive properties. Beta-alumina is a form of alumina in which metal ions other than aluminum and oxygen are included in the crystal lattice. Beta-alumina generally exhibits inferior properties as an abrasive material as compared to alpha-alumina.

Many commercially important alpha-alumina abrasive particles are derived from a sol-gel precursor. They are made by preparing a dispersion (e.g., a sol) comprising water, an alpha-alumina precursor such as, e.g., alumina monohydrate (boehmite), and optionally peptizing agent (e.g., an acid such as nitric acid), then gelling the dispersion, drying the gelled dispersion, crushing the dried dispersion into particles, calcining the particles to remove volatiles, and sintering the calcined particles at a temperature below the melting point of alpha-alumina. Frequently, the dispersion also includes one or more oxide modifiers (e.g., rare earth oxides (REOs), Cr₂CO₃, CoO, Fe₂O₃, Li₂O, MgO, MnO, Na₂O, NiO, SiO₂, SnO₂, TiO₂, , ZnO, and ZrO₂), nucleating agents (e.g., alpha-Al₂O₃, alpha-Cr₂O₃, and alpha-Fe₂O₃) and/or precursors thereof. Such additions are typically made to alter or otherwise modify the physical properties and/or microstructure of the sintered abrasive particles. In addition, or alternatively, such oxide modifiers, nucleating agents, and/or precursors thereof may be impregnated into the dried or calcined material (typically calcined particles). Among the most useful of the oxide modifiers are REOs such as, for example, lanthanum oxide, neodymium oxide, yttrium oxide, cerium oxide, europium oxide, hafnium oxide, erbium oxide, samarium oxide, ytterbium oxide, gadolinium oxide, and praseodymium oxide. In recent years, the availability of REOs has become a major problem for all industries, limiting supply and driving up costs.

Sol-gel-derived alpha-alumina-based sintered abrasive particles have been used in a wide variety of abrasive products (e.g., bonded abrasives, coated abrasives, and abrasive brushes) and abrading applications, including both low and high pressure grinding applications.

GB 2,099,012 relates to a process for forming abrasive grains which comprises a) preparing a dispersion comprising from about 2 to about 60 weight percent aluminium oxide monohydrate; a dissolved metal containing sintering aid in an atomic ratio of metal in the sintering aid to aluminium in the aluminium oxide monohydrate of from 1:2 to 1:35, and from above about 0.05 to about 1.8 weight percent sodium plus calcium by weight of dispersed and dissolved metal containing solids in the dispersion, provided that the weight percent calcium is from 0 to about 1.8 and the weight percent sodium is from 0 to about 0.4; b) gelling said dispersion; c) drying the gelled dispersion at a temperature below the frothing temperature of the gel to vaporize free water; d) crushing the dried solid to form grains; e) rapidly heating the grains to above about 1200°C in less than 10 minutes; and f) continuing to heat the grains at a sintering temperature between about 1200°C and about 1650°C for a sufficient sintering time to sinter the grains to a density above about 85% of theoretical density.

EP 0 603 715 relates to a ceramic abrasive grain comprising (a) an alpha alumina matrix; and (b) at least 0.07 percent by weight of one of calcium oxide, strontium oxide, or a combination thereof, based on the total weight of said ceramic abrasive grain, in the form of a crystalline reaction product(s) with aluminum oxide and rare earth oxide selected from the group consisting of praseodymium oxide, samarium oxide, europium oxide, holmium oxide, lanthanum oxide, gadolinium oxide, dysprosium oxide, cerium oxide, neodymium oxide, erbium oxide, and mixtures thereof; said crystalline reaction product(s) comprising a phase(s) within said alpha alumina matrix, said ceramic abrasive grain having an average hardness of at least 17 GPa.

### SUMMARY

In one aspect, the present disclosure provides abrasive particles, wherein each of the abrasive particles comprises an alpha-alumina crystalline phase and from 0.25 to 20 percent by weight of a beta-alumina crystalline phase, based on the total weight of the alpha-alumina crystalline phase and the beta-alumina crystalline phase combined, wherein the beta-alumina crystalline phase is represented by the empirical formula XQAl₁₀O₁₇, wherein:
X is selected from the group consisting of Sr and Ba; and
Q is selected from the group consisting of Mg, Co, Ni, and Zn.

In another aspect, the present disclosure provides a method of making abrasive particles, the method comprising:
providing a dispersion comprising an alumina precursor material, wherein the alumina precursor material comprises:
   aluminum ions;
   at least one first divalent cation selected from the group consisting of Sr and Ba; and
   at least one second divalent cation selected from the group consisting of Mg, Co, Ni, and Zn;
combining seed particles with the dispersion, wherein the seed particles comprise a nucleating agent or a precursor thereof that facilitates conversion of the alumina precursor material to alpha-alumina (e.g., during sintering);
converting the dispersion to abrasive precursor particles; and
sintering the abrasive precursor particles to provide the abrasive particles, wherein each of the abrasive particles comprises an alpha-alumina crystalline phase and from 0.25 to 20 percent by weight of a beta-alumina crystalline phase, based on the total weight of the alpha-alumina crystalline phase and the beta-alumina crystalline phase combined.

In yet another aspect, the present disclosure provides abrasive articles (e.g., coated abrasives, bonded abrasives, nonwoven abrasives, or abrasive brushes) comprising abrasive particles according to the present disclosure. The abrasive articles are useful, for example, for abrading a workpiece.

Accordingly, in yet another aspect, the present disclosure provides a method of abrading a workpiece, the method comprising:
frictionally contacting abrasive particles according to the present disclosure with a surface of the workpiece, and
moving at least one of the abrasive particles and the surface of the workpiece relative to the other to abrade at least a portion of the surface of the workpiece.

Advantageously, and quite unexpectedly, abrasive particles according to the present disclosure generally exhibit one or more superior abrasive performance properties as compared to conventional alpha-alumina abrasive particles. They may even exhibit one or more abrasive performance properties that is/are equivalent to, or even superior to, commercially alpha-alumina abrasive particles containing expensive and difficult to obtain rare earth oxides, which are typically among the best-performing alumina-based abrasives, for example, for grinding stainless steel.

Features and advantages of the present disclosure will be further understood upon consideration of the detailed description as well as the appended claims.

### BRIEF DESCRIPTION OF THE DRAWINGS

FIG. 1 is a schematic cross-sectional view of an exemplary coated abrasive article including abrasive particles according to the present disclosure;
FIG. 2 is a schematic cross-sectional view of another exemplary coated abrasive article including abrasive particles according to the present disclosure;
FIG. 3 is a schematic perspective view of an exemplary bonded abrasive article including abrasive particles according to the present disclosure; and
FIG. 4 is an enlarged schematic view of a nonwoven abrasive article including abrasive particles according to the present disclosure.

While the above-identified drawing figures set forth several embodiments of the present disclosure, other embodiments are also contemplated; for example, as noted in the discussion. In all cases, the disclosure is presented by way of representation and not limitation. It should be understood that numerous other modifications and embodiments can be devised by those skilled in the art, which fall within the scope and spirit of the principles of the disclosure. The figures may not be drawn to scale. Like reference numbers may have been used throughout the figures to denote like parts.

### DETAILED DESCRIPTION

Abrasive particles according to the present disclosure include an alpha-alumina crystalline phase and a beta-alumina crystalline phase.

The beta-alumina crystalline phase has the empirical formula XQAl₁₀O₁₇. X is selected from the group consisting of strontium and barium. For example, X may be represented as
SrₐBa_{b}, wherein a and b represent numbers greater than or equal to zero such that a + b = 1. Likewise, Q is selected from the group consisting of Mg, Co, Ni, and Zn, and may be represented as MgₚCo_{q}NiᵣZnₛ, wherein p, q, r, and s represent greater than or equal to zero such that p + q + r + s ₌ 1.

In some embodiments, the abrasive particles comprise from 0.25 to 20 percent by weight of the beta-alumina crystalline phase, although other amounts may be used. Preferably, the abrasive particles comprise from 0.25 to 8 percent by weight, and more preferably from 2 to 4 percent by weight of the beta-alumina crystalline phase. In some embodiments, the abrasive particles comprise from 0.04 to 2.60 percent by weight (preferably from 0.1 to 2.1 percent by weight, and more preferably from 0.1 to 1 percent by weight) of the metal oxide XO, and from 0.01 to 4.5 percent by weight (preferably from 0.1 to 3.5 percent by weight, more preferably from 0.5 to 3 percent by weight, and more preferably from one to 2.5 percent) of the metal oxide QO.

Without wishing to be bound by theory it is believed that other divalent metal cations may be substituted for those given above as long as their ionic radius in the beta-alumina crystal lattice falls in the range of from the smallest and largest ions (e.g., an ionic radius in the range of from the ionic radius of strontium to the ionic radius of barium for component X, and an ionic radius in the range of from the ionic radius of magnesium to the ionic radius of zinc for component Q).

Sources for the metals X and Q can be included, for example, in the initial dispersion and/or in an impregnating composition (discussed hereinafter). Useful sources include, for example, water-soluble or dispersible salts, complexes, and dispersible metal oxides (e.g., milled metal oxide powders). Examples include nitrate salts (e.g., magnesium nitrate, cobalt nitrate, nickel nitrate, zinc nitrate, barium nitrate,
and strontium nitrate), metal carboxylate salts (e.g., cobalt acetate, nickel acetate, magnesium acetate, cobalt citrate, barium acetate, magnesium citrate, zinc acetate, cobalt formate, magnesium formate, and nickel formate.

Certain rare earth oxides and divalent metal cations react with alumina to form a rare earth aluminate represented by the formula LnMA1₁₁O₁₉, wherein Ln is a trivalent metal cation such as La³⁺, Nd³⁺, Ce³⁺, Pr³⁺, Sm³⁺, Gd³⁺, Er³⁺, or Eu³⁺, and M is a divalent metal cation such as Mg²⁺, Mn²⁺, Ni²⁺, Zn²⁺, Sr²⁺, Ca²⁺, or Co²⁺. Such aluminates, which are typically in the form of platelets, have a hexagonal crystal structure and are known in the art as magnetoplumbites.

In some embodiments, abrasive particles according to the present disclosure are advantageously essentially free of rare earth oxide (REO) and REO magnetoplumbite crystalline phase domains. Accordingly, the abrasive particles comprise less than one percent by weight (e.g., less than 0.9, 0.8, 0.7, 0.6, 0.5, 0.4, 0.3, 0.2, 0.1, or even less than 0.005 percent by weight, or none) of material having a magnetoplumbite crystalline phase.

Abrasive particles according to the present disclosure can be made by a process that starts with an initial dispersion comprising one or more alumina sources (e.g., alpha-alumina and/or an alpha-alumina precursor material(s)) dispersed in a dispersing medium. As used herein, the term "dispersion" refers to a system, for example, such as a colloid or sol, consisting of a disperse phase in a dispersing medium. The dispersing medium is a liquid, typically water, although organic solvents, such as lower alcohols (typically C₁-C₆ alcohols), hexane, or heptane, may also be useful as the liquid medium. The water may be, for example, tap water, distilled water, or deionized water.

The dispersion may comprise one or more alumina sources, for example, such as boehmite. Boehmite sols are commercially available, for example, as DISPERAL from Sasol Limited, Johannesburg, South Africa; as DISPAL 23N480 and CATAPAL D from Sasol North America, Houston, Texas; and under the trade designation HIQ (e.g., HIQ-10, HIQ-20, HIQ-30, and HIQ-40) from BASF, Catalysts Division, Iselin, New Jersey. These boehmites or alumina monohydrates are in the alpha-form, and include relatively little, if any, hydrated phases other than monohydrates).

The dispersion comprises at least one alumina source (e.g., alpha-alumina and/or an alumina precursor) separately from, or in combination with, one or more of the alumina sources described above. Examples of other alpha-alumina sources and precursors include alpha-alumina powders, gamma alumina powders, basic aluminum carboxylates (e.g., aluminum formoacetate, aluminum nitroformoacetate), partially hydrolyzed aluminum alkoxides, hydrated aluminas, aluminum complexes, and aluminum salts (e.g., basic aluminum nitrates), and combinations thereof. In the case of the basic aluminum carboxylates, these are of the general formula Al(OH)_{y}(carboxylate)_{3-y}, where y is between 1 and 2, in some embodiments between 1 and 1.5, and the carboxylate counterion is selected from the group consisting of formate, acetate, propionate, and oxalate or combinations of these carboxylates. These materials can be prepared, for example, by digesting aluminum metal in a solution of the carboxylic acid as described in U.S. Patent No. 3,957,598 (Merkl). Basic aluminum nitrates can also be prepared, for example, by digesting aluminum metal in a nitric acid solution as described in U.S. Patent No. 3,340,205 (Hayes et al.), or British Patent No. 1,193,258, or by the thermal decomposition of aluminum nitrate as described in U.S. Patent No. 2,127,504 (Derr et al.). These materials can also be prepared, for example, by partially neutralizing an aluminum salt with a base. The basic aluminum nitrates have the general formula Al(OH)_{z}(NO₃)_{3-z}, where z is between about 0.5 to 2.5.

Optionally, and typically, the dispersion is treated with a peptizing agent. Suitable peptizing agents are generally soluble ionic compounds which are believed to cause the surface of a particle or colloid to be uniformly charged in a liquid medium (e.g., water). In some embodiments, the peptizing agents are acids or acid compounds. Examples of typical acids include monoprotic acids and acid compounds, such as acetic, hydrochloric, formic, and nitric acid, with nitric acid being preferred. The amount of acid used depends, for example, on the dispersibility of the particulate alumina source, the percent solids of the dispersion, the components of the dispersion, the amounts, or relative amounts of the components of the dispersion, the particle sizes of the components of the dispersion, and/or the particle size distribution of the components of the dispersion. The dispersion typically contains at least, 0.1 to 20 percent, and in some embodiments 1 to 10 percent by weight acid, or even 3 to 8 percent by weight acid, based on the weight of alumina source (e.g., boehmite and/or an-alumina precursor) in the dispersion.

Suitable peptizing agents are generally soluble ionic compounds, which are believed to cause the surface of a particle or colloid to be uniformly charged in a liquid medium (e.g., water). In some embodiments, the peptizing agents are acids or acid compounds. Examples of typical acids include monoprotic acids and acid compounds, such as acetic, hydrochloric, formic, and nitric acid, with nitric acid being preferred. The amount of acid used typically will depend, for example, on the dispersibility of a particulate alumina source, the percent solids of the dispersion, the components of the dispersion, the amounts, or relative amounts of the components of the dispersion, the particle sizes of the components of the dispersion, and/or the particle size distribution of the components of the dispersion. The dispersion typically contains at least, 0.1 to 20 percent, and in some embodiments 1 to 10 percent by weight acid, or even 3 to 8 percent by weight acid, based on the weight of the alumina source in the dispersion. In some embodiments, the acid may be applied to the surface of boehmite particles prior to being combined with the water. The acid surface treatment may provide improved dispersibility of the boehmite in the water.

In some embodiments, the initial dispersion may, optionally, be seeded or nucleated by an appropriate nucleating agent (e.g., alpha-alumina seed particles, iron oxide (e.g., alpha-iron oxide) and precursors thereof, chromia and precursors, manganese oxide, and titanates). further comprises seed particles that serve to modify grain size of the alpha-alumina crystalline phase. Seed particles, if used, are preferably of a small size (e.g., less than 5 microns, preferably less than one micron). The addition of a seed or nucleating agent results, after sintering, in smaller alpha-alumina crystallites or cells in the resulting abrasive particles, producing a more durable abrasive grain.

The initial dispersion (and/or an impregnation composition, if used, as discussed hereinafter) may further comprise additional metal oxide precursors/sources (i.e., materials that are capable of being converting into metal oxide with the appropriate heating conditions) other than the strontium, barium, magnesium, cobalt, nickel, and zinc included in the beta-alumina crystalline phase. Such materials are referred to herein as metal oxide modifiers. Such metal oxide modifiers may alter the physical properties and/or chemical properties of the resulting abrasive particle. The amount of these other metal oxide modifiers incorporated into the initial dispersion and/or impregnation composition (if used) may depend, for example, on the desired composition and/or properties of the resulting sintered abrasive particle, as well as on the effect or role the additive may have on or play in the process used to make the abrasive particle.

The metal oxide modifiers may be a metal oxide (e.g., as a colloidal suspension or a sol) and/or as a metal oxide precursor (e.g., a metal salt such as metal nitrate salts, metal acetate salts, metal citrate salts, metal formate salts, and metal chloride salts). For metal oxide particles, the metal oxide particles are generally less than 5 micrometers, or even less than one micrometer in size. The colloidal metal oxides are discrete finely divided particles of amorphous or crystalline metal oxide typically having one or more of their dimensions within a range of about 3 nanometers to about one micrometer. The colloidal metal oxide sols are typically stable (i.e., the metal oxide solids in the sol or dispersion do not appear by visual inspection to begin to gel, separate, or settle upon standing undisturbed for about 2 hours) suspension of colloidal particles (in some embodiments in a liquid medium having a pH of less than 6.5).

Examples of such other metal oxide modifiers include: chromium oxide, ferric oxide, zirconium oxide, hafnium oxide, cerium oxide, and/or silica.

Examples of useful metal oxide precursors include metal salts (e.g., metal nitrate salts, metal acetate salts, metal citrate salts, metal formate salts, and metal chloride salts). Metal nitrate, acetate, citrate, formate, and chloride salts can be made by techniques known in the art, or obtained from commercial sources such as Alfa Chemicals, Ward Hill, Massachusetts, and Mallinckrodt Chemicals, Paris, Kentucky. Examples of nitrate salts include lithium nitrate, manganese nitrate, chromium nitrate, dysprosium nitrate, erbium nitrate, ytterbium nitrate, yttrium nitrate, praseodymium nitrate, neodymium nitrate, lanthanum nitrate, europium nitrate, and ferric nitrate. Examples of metal acetate salts include lithium acetate, manganese acetate, chromium acetate, dysprosium acetate, lanthanum acetate, neodymium acetate, praseodymium acetate, samarium acetate, ytterbium acetate, yttrium acetate, ytterbium acetate. Examples of citrate salts include lithium citrate and manganese citrate. Examples of formate salts include lithium formate and manganese formate.

Advantageously, abrasive particles according to the present disclosure may exhibit excellent abrasive properties without including rare earth oxides, which have associated problems as discussed above. Accordingly, the abrasive particles may contain less than one, 0.5, 0.4, 0.3, 0.2, 0.1, or even less than 0.01 percent by weight of rare earth oxide(s) taken as a whole.

Exemplary zirconia sources include zirconium salts and zirconia sols, although the zirconia source in an impregnation composition is typically a zirconium salt that forms a solution in the liquid medium. Examples of zirconium salts include zirconium acetate, zirconium oxynitrate, zirconium hydroxynitrate, zirconium formate, and zirconium acetylacetonate, zirconium alkoxides (e.g., butoxide, ethoxide, propoxide, and tert-butoxide), zirconium chloride, zirconium nitrate, ammonium complex, ammonium zirconium carbonate, zirconium tetrachloride, zirconium oxychloride octahydrate. The zirconia sol comprises finely divided particles of amorphous or crystalline zirconia typically having one or more of their dimensions within a range of about 3 nanometers to about 250 nanometers. The average zirconia particle size in the colloidal zirconia is typically less than about 150 nanometers, less than about 100 nanometers, or even less than about 50 nanometers. In some instances, the zirconia particles can be on the order of about 3-10 nanometers. In most instances, the colloidal zirconia comprises a distribution or range of zirconia particle sizes. Zirconia sols include those available from Nyacol Nano Technologies, Inc. as NYACOL ZrO₂ (acetate stabilized) and ZR100/20. For more information on zirconia sols, see, for example, U.S. Patent No. 5,498,269 (Larmie) and U.S. Patent No. 5,551,963 (Larmie).

For additional details regarding the inclusion of metal oxide (and/or precursors thereof) in a boehmite dispersion see, for example, in U.S. Patent No. 4,314,827 (Leitheiser et al.), U.S. Patent No. 4,770,671 (Monroe et al.), U.S. Patent No. 4,881,951 (Wood et al.), U.S. Patent No. 5,429,647 (Larmie), U.S. Patent No. 5,498,269 (Larmie), and U.S. Patent No. 5,551,963 (Larmie).

Dispersions (e.g., boehmite-based dispersions) utilized in the practice of the present disclosure typically comprise greater than 15 percent by weight (generally from greater than 20 to about 80 percent by weight; typically greater than 30 to about 80 percent by weight) solids (or alternatively boehmite), based on the total weight of the dispersion. In some embodiments, however, dispersions comprise 35 percent by weight or more, 45 percent by weight or more, 50 percent by weight or more, 55 percent by weight or more, 60 percent by weight or more, or 65 percent by weight or more by weight or more solids (or alternatively boehmite), based on the total weight of the dispersion. Percentages by weight of solids and boehmite above about 80 percent by weight may also be useful, but tend to be more difficult to process to make the abrasive particle provided by the method according to the present disclosure.

General procedures for making alpha-alumina-based abrasive particles are disclosed for example, in U.S. Patent No. 4,518,397 (Leitheiser et al.), U.S. Patent No. 4,770,671 (Monroe), U.S. Patent No. 4,744,802 (Schwabel), U.S. Patent No. 5,139,978 (Wood), U.S. Patent No. 5,219,006 (Wood), and U.S. Patent No. 5,593,647 (Monroe).

The (initial) dispersion is typically prepared by adding the various constituent components, and then mixing them together to provide a homogenous mixture. For example, boehmite may be added to water that has been mixed with nitric acid. The other components may be added before, during, or after the boehmite is added.

A high-solids dispersion is typically prepared by gradually adding a liquid component(s) to a component(s) that is non-soluble in the liquid component(s), while the latter is mixing or tumbling. For example, a liquid containing water, nitric acid, and metal salt may be gradually added to boehmite, while the latter is being mixed such that the liquid is more easily distributed throughout the boehmite.

Suitable mixers include pail mixers, sigma blade mixers, ball mill and high shear mixers. Other suitable mixers may be available from Eirich Machines, Inc., Gurnee, Illinois; Hosokawa-Bepex Corp., Minneapolis, Minnesota (including a mixer available under the trade designation SCHUGI FLEX-O-MIX, Model FX-160); and Littleford-Day, Inc., Florence, Kentucky.

Boehmite-based dispersions may be heated to increase the dispersibility of the alpha-alumina monohydrate, other particulate material, and/or to create a homogeneous dispersion. The temperature may vary to convenience, for example the temperature may range from about 20°C to 80°C, usually between 25°C and 75°C. In addition or alternatively, for example, the dispersion may be heated under a pressure ranging from 1.5 to 130 atmospheres of pressure.

Boehmite-based dispersions typically gel prior to, or during, drying. The addition of most modifiers may result in the dispersion gelling faster. Alternatively, ammonium acetate or other ionic species may be added to induce gelation of the dispersion. The pH of the dispersion and concentration of ions in the gel generally determines how fast the dispersion gels. Typically, the pH of the dispersion is within a range of about 1.5 to about 5.

The dispersion may be extruded. It may be preferable to extrude (typically a dispersion where at least 50 percent by weight of the alumina content is provided by particulate (e.g., boehmite), including in this context a gelled dispersion, or even partially deliquified dispersion. The extruded dispersion, referred to as extrudate, can be extruded into elongated precursor material (e.g., rods (including cylindrical rods and elliptical rods)). After firing, the rods may have an aspect ratio of from 1.5 to 10, in some embodiments of from 2 to 6. Alternatively the extrudate may be in the form of a very thin sheet, see for example U.S. Patent No. 4,848,041 (Kruschke). Examples of suitable extruders include ram extruders, single screw, twin screw, and segmented screw extruders.

The dispersion can be compacted, for example, prior to or during extrusion (wherein the extrusion step may inherently involve compaction of the dispersion). In compacting the dispersion, it is understood that the dispersion is subjected to a pressure or force such as experienced, for example, in a pelletizer or die press (including mechanical, hydraulic and pneumatic or presses) or an extruder (i.e., all or substantially all of the dispersion experiences the specified pressure). In general, compacting the dispersion reduces the amount of air or gases entrapped in the dispersion, which in turn generally produces a less porous microstructure. Additionally, a compaction step may result in an easier way to continuously feed the extruder and thus may save on labor.

The dispersion is converted into abrasive precursor particles (i.e., particles of that can be converted into abrasive particles, e.g., by drying and sintering). In general, techniques for drying the dispersion are known in the art, including heating to promote evaporation of the liquid medium, or simply drying in air. The drying step generally removes a significant portion of the liquid medium from the dispersion; however, there still may be a minor portion (e.g., about 10 percent or less by weight) of the liquid medium present in the dried dispersion. Typical drying conditions include temperatures ranging from about room temperature to over about 200°C, more typically between 50°C and 150°C, although this is not a requirement. The times may range from about 30 minutes to over days. To minimize salt migration, it may be preferable to dry the dispersion at low temperature.

After drying, the dried dispersion may be converted into abrasive precursor particles. One typical means to generate these abrasive precursor particles is by a crushing technique. Various crushing or comminuting techniques may be employed such as a roll crusher, jaw crusher, hammer mill, ball mill and the like. Coarser particles may be re-crushed to generate finer particles. In some embodiments, the dried dispersion is crushed, as it is typically easier to crush dried gel than sintered alpha-alumina based abrasive particles according to the present disclosure.

Alternatively, for example, the mixture may be converted into abrasive precursor particles prior to drying. This may occur for instance if the mixture is processed into a preferred particle shape and particle size distribution. For example, the dispersion may be extruded into rods that are subsequently cut to the preferred lengths and then dried. Alternatively, for example, the mixture may be molded into a triangular shape particle and then dried. Additional details concerning triangular shaped particles may be found in U.S. Patent No. 5,201,916 (Berg et al.). Still other shapes of abrasive particles that are formed by a sol-gel molding process are described in, for example, in U.S. Patent Nos. 8,142,891 B2 (Culler et al.); 8,034,137 B2 (Erickson et al.); 8,142,532 B2 (Erickson et al.); 8,142,531 B2 (Adefris et al.); 8,123,828 A (Culler et al.); and in U.S. Patent Appl. Publ. 2010/0146867 A1 (Boden et al.), and PCT International Publ. No. WO 2011/109188 A2 (Givot et al.).

Alternatively, for example, the dried mixture (e.g., dispersion) may be shaped into lumps with a high content of volatilizable components, which are then explosively comminuted by feeding the lumps directly into a furnace held at a temperature above 350°C, usually a temperature between 600°C and 900°C.

It is also within the scope of the present disclosure to impregnate a metal oxide modifier source (typically a metal oxide precursor) into a dried and/or calcined abrasive precursor particle. Typically, the metal oxide precursors are in the form metal salts. Exemplary useful metal oxide precursors and metal salts are described herein above with respect to the initial dispersion.

Methods of impregnating sol-gel-derived dried and/or calcined particles are described in general, for example, in U.S. Patent No. 5,164,348 (Wood). In general, ceramic precursor material (i.e., dried alumina-based mixture (or dried ceramic precursor material), or calcined alumina-based mixture (or calcined ceramic precursor material)) is porous. For example, a calcined ceramic precursor material typically has pores about 2-15 nanometers in diameter extending therein from an outer surface. The presence of such pores allows an impregnation composition comprising a mixture comprising liquid medium (typically water) and appropriate metal precursor to enter into ceramic precursor material. The metal salt material is dissolved in a liquid, and the resulting solution mixed with the porous ceramic precursor particle material. The impregnation process is thought to occur through capillary action.

The liquid used for the impregnating composition can be, for example, water (including deionized water), an organic solvent, and mixtures thereof if impregnation of a metal salt is preferred, the concentration of the metal salt in the liquid medium is typically in the range from about 5 to about 40 percent dissolved solids, on a theoretical metal oxide basis. In some embodiments, there is at least 50 milliliters (ml) of solution added to achieve impregnation of 100 grams (g) of porous precursor particulate material, and, for example, in some embodiments, at least about 60 ml of solution to 100 g of precursor particulate material.

Typically, the abrasive precursor particles are calcined, prior to sintering, although a calcining step is not a requirement. In general, techniques for calcining the abrasive precursor particles, wherein essentially all the volatiles are removed, and the various components that were present in the dispersion are transformed into oxides, are known in the art. Such techniques include using a rotary or static furnace to heat dried mixture at temperatures ranging from about 400 to 1000°C (typically from about 450 to 800°C) until the free water, and typically until at least about 90 percent by weight of any bound volatiles are removed.

After the abrasive precursor particles are formed, and optionally calcined, the abrasive precursor particles are sintered to provide alpha-alumina-based abrasive particles. In general, techniques for sintering the abrasive precursor particles, which include heating at a temperature effective to transform transitional alumina(s) into alpha-alumina, causing all of the metal oxide precursors to either react with the alumina or form metal oxide, and increasing the density of the ceramic material, are known in the art. The abrasive precursor particles may be sintered by heating (e.g., using electrical resistance, microwave, plasma, laser, or gas combustion, on batch basis or a continuous basis). Sintering temperatures are usually range from about 1200°C to about 1650°C; typically, from about 1200°C to about 1500°C; more typically, less than 1450 °C. The length of time which the abrasive precursor particles are exposed to the sintering temperature depends, for example, on particle size, composition of the particles, and sintering temperature. Typically, sintering times range from a few seconds to about 60 minutes (in some embodiments, within about 3-30 minutes). Sintering is typically accomplished in an oxidizing atmosphere, although inert or reducing atmospheres may also be useful.

The longest dimension of abrasive particles according to the present disclosure is typically at least about one micrometer, although it may be less. The abrasive particles described herein can be readily made with a length of greater than about 50 micrometers, and larger abrasive particles (e.g., greater than about one millimeter or even greater than about 5 millimeters) can also be readily made. In some embodiments, abrasive particles have length(s) in the range from about 0.1 to about 5 millimeters (typically in the range from about 0.1 to about 3 millimeters), although other sizes are also useful, and may even be more preferable for certain applications. In another aspect, abrasive particles according to the present disclosure, typically have an aspect ratio of at least 1.2:1 or even 1.5:1, sometimes at least 2:1, and alternatively, at least 2.5:1.

Dried, calcined, and/or sintered materials provided during or by a method according to the present disclosure, are typically screened and graded using techniques known in the art. For example, the dried particles may be screened to a preferred size prior to calcining. Sintered abrasive particles are typically screened and graded prior to use in an abrasive application or incorporation into an abrasive article.

It is also within the scope of the present disclosure to recycle unused (typically particles too small in size to provide the preferred size of sintered abrasive particles) deliquified mixture (typically dispersion) material as generally described, for example, in U.S. Patent No. 4,314,827 (Leitheiser et al.). For example, a first dispersion can be made as described above, dried, crushed, and screened, and then a second dispersion made by combining, for example, liquid medium (e.g., aqueous), boehmite, and deliquified material from the first dispersion, and optionally metal oxide and/or metal oxide precursor. The recycled material may provide, on a theoretical metal oxide basis, for example, at least 10 percent, at least 30 percent, at least 50 percent, or even up to (and including) 100 percent of the theoretical Al₂O₃ content of the dispersion which is deliquified and converted (including calcining and sintering) to provide the sintered abrasive particles.

It is also within the scope of the present disclosure to coat the abrasive particles with a surface coating, for example, as described in U.S. Patent No. 1,910,440 (Nicholson), U.S. Patent No. 3,041,156 (Rowse), U.S. Patent No. 5,009,675 (Kunz et al.), U.S. Patent No. 4,997,461 (Markhoff-Matheny et al.), and U.S. Patent No. 5,042,991 (Kunz et al.), U.S. Patent No. 5,011,508 (Wald et al.), and U.S. Patent No. 5,213,591 (Celikkaya et al.).

In some embodiments, sintered alpha-alumina-based abrasive particles according to the present disclosure further comprise a zirconia coating. Although not wanting to be bound by theory, it is believed that such coated abrasive particles are particularly useful in bonded abrasives utilizing a vitrified bond as the coating adds texture to the surface of the abrasive particles thereby increasing mechanical adhesion of the abrasive particles to the vitrified binder. Further, it is believed such coating protects the abrasive particles from reacting with the vitrified binder and weakening the abrasive particle.

Such zirconia coatings can be applied, for example, by the impregnation method described above, wherein the zirconia source is, for example zirconium oxynitrate and/or zirconium hydroxynitrate.

Typically, abrasive particles according to the present disclosure have an average alpha-alumina crystallite size in a range from 0.05 micrometers to 20 micrometers, and in some embodiments, in a range from 0.1 micrometer to 1.0 micrometers, although this is not a requirement.

Abrasive particles made according the present disclosure may have a variety of densities, typically depending on process conditions (e.g., sintering conditions). Useful densities will typically depend on the intended end use. In some embodiments, abrasive particles according to the present disclosure have a density (i.e., true density) of at least 3.7, 3.75, 3.8, 3.85, 3.9, or even at least 3.95 g/cm³, although other densities may also be used.

Abrasive particles according to the present disclosure may exhibit excellent hardness. Accordingly, in some embodiments, they may have an average hardness of at least 19, 20, or even at least 21 gigapascals (GPa).

The average hardness of the material of the present disclosure can be determined as follows. Sections of the material are mounted in mounting resin (obtained under the trade designation TRANSOPTIC POWDER from Buehler, Lake Bluff, Illinois) typically in a cylinder of resin about 2.5 cm in diameter and about 1.9 cm high. The mounted section is prepared using conventional polishing techniques using a polisher (such as that obtained from Buehler, Lake Bluff, Illinois under the trade designation ECOMET 3). The sample is polished for about 3 minutes with a 70 micrometer diamond wheel, followed by 5 minutes of polishing with each of 45, 30, 15, 9, 3, and 1-micrometer slurries. The microhardness measurements can be made using a conventional microhardness tester (such as that obtained under the trade designation MITUTOYO MVK-VL from Mitutoyo Corporation, Tokyo, Japan) fitted with a Vickers indenter, e.g., using a 500-gram indent load. Microhardness measurements are made according to the guidelines stated in ASTM Test Method E384 Test Methods for Microhardness of Materials (1991).

Abrasive particles according to the present disclosure may be, for example, crushed or shaped.

Abrasive particles according to the present disclosure, and especially crushed abrasive particles, can be screened and graded using techniques well known in the art, including the use of an abrasives industry recognized grading standards such as ANSI (American National Standard Institute), FEPA (Federation of European Producers of Abrasives), and JIS (Japanese Industrial Standard). Abrasive particles according to the present disclosure may be used in a wide range of particle sizes, typically ranging in size from about 0.1 to about 5000 micrometers, more typically from about one to about 2000 micrometers; preferably from about 5 to about 1500 micrometers, more preferably from about 100 to about 1500 micrometers.

ANSI grade designations include: ANSI 4, ANSI 6, ANSI 8, ANSI 16, ANSI 24, ANSI 36, ANSI 40, ANSI 50, ANSI 60, ANSI 80, ANSI 100, ANSI 120, ANSI 150, ANSI 180, ANSI 220, ANSI 240, ANSI 280, ANSI 320, ANSI 360, ANSI 400, and ANSI 600. FEPA grade designations include P8, P12, P16, P24, P36, P40, P50, P60, P80, P100, P120, P150, P180, P220, P320, P400, P500, P600, P800, P1000, and P1200. JIS grade designations include JIS8, JIS12, JIS16, JIS24, JIS36, JIS46, JIS54, JIS60, JIS80, JIS100, JIS150, JIS180, JIS220, JIS240, JIS280, JIS320, JIS360, JIS400, JIS400, JIS600, JIS800, JIS 1000, JIS 1500, JIS2500, JIS4000, JIS6000, JIS8000, and JIS 10,000.

Shaped abrasive particles according to the present disclosure have non-random shapes, generally imparted by the method used to form them. For example, shaped abrasive particles may be shaped as pyramids, truncated pyramids, rods, or cones. Shaped abrasive particles can be made by extrusion or screen printing of a sol-gel mixture (e.g., as described in U.S. Patent No. 6,054,093 (Torre, Jr. et al)), or by a sol-gel molding process using a production tool (i.e., mold) as described in, for example, U.S. Patent Appln. Publ. Nos. 2010/0146867 A1 (Boden et al.); 2010/0151195A1 (Culler et al.); 2010/0151196 A1 (Adefris et al.); 2009/0165394 A1 (Culler et al.); and 2010/0151201A1 (Erickson et al.). In these methods it may be desirable to include a mold release compound in the initial dispersion, or to coat the mold release onto the mold surface, to aid in removing the particles from the mold if desired. Typical mold release agents include oils such as peanut oil or mineral oil, fish oil, silicones, polytetrafluoroethylene, zinc stearate, and graphite.

In another aspect, the present disclosure provides agglomerate abrasive particles each comprise a plurality of abrasive particles according to the present disclosure bonded together via a binder.

In another aspect, the present disclosure provides an abrasive article (e.g., coated abrasive articles, bonded abrasive articles (including vitrified, resinoid, and metal-bonded grinding wheels, cut-off wheels, mounted points, and honing stones), nonwoven abrasive articles, and abrasive brushes) comprising a binder and a plurality of abrasive particles, wherein at least a portion of the abrasive particles are abrasive particles (including where the abrasive particles are agglomerated) according to the present disclosure. Methods of making such abrasive articles and using abrasive articles are well known to those skilled in the art. Furthermore, abrasive particles according to the present disclosure can be used in abrasive applications that utilize abrasive particles, such as slurries of abrading compounds (e.g., polishing compounds), milling media, shot blast media, vibratory mill media, and the like.

Coated abrasive articles generally include a backing, abrasive particles, and at least one binder to hold the abrasive particles onto the backing. Examples of suitable backing materials include woven fabric, polymeric film, vulcanized fiber, a nonwoven fabric, a knit fabric, paper, combinations thereof, and treated versions thereof. The binder can be any suitable binder, including an inorganic or organic binder (including thermally curable resins and radiation curable resins). The abrasive particles can be present in one layer or in two layers of the coated abrasive article.

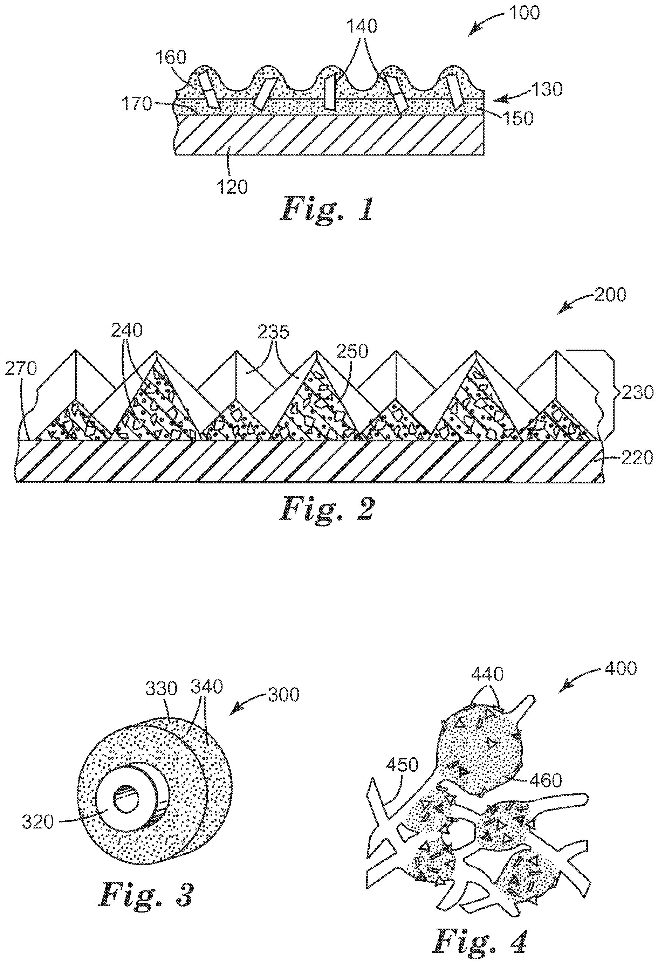

An exemplary embodiment of a coated abrasive article according to the present disclosure is depicted in FIG. 1. Referring to FIG. 1, coated abrasive article 100 has a backing 120 and abrasive layer 130. Abrasive layer 130 includes abrasive particles 140 according to the present disclosure secured to a major surface 170 of backing 120 (substrate) by make coat 150 and size coat 160. Additional layers, for example, such as an optional supersize layer (not shown) that is superimposed on the size layer, or a backing antistatic treatment layer (not shown) may also be included, if desired.

Another exemplary a coated abrasive article according to the present disclosure is depicted in FIG. 2. Referring to FIG. 2, exemplary coated abrasive article 200 has a backing 220 (substrate) and structured abrasive layer 230. Structured abrasive layer 230 includes a plurality of shaped abrasive composites 235 comprising abrasive particles 240 according to the present disclosure dispersed in a binder material 250 secured to a major surface 270 of backing 220.

Coated abrasive articles according to the present disclosure may include additional layers such as, for example, an optional supersize layer that is superimposed on the abrasive layer, or a backing antistatic treatment layer may also be included, if desired.

Further details regarding coated abrasive articles can be found, for example, in U.S. Patent Nos. 4,734,104 (Broberg); 4,737,163 (Larkey); 5,203,884 (Buchanan et al.); 5,152,917 (Pieper et al.); 5,378,251 (Culler et al.); 5,436,063 (Follett et al.); 5,496,386 (Broberg et al.); 5,609,706 (Benedict et al.); 5,520,711 (Helmin); 5,961,674 (Gagliardi et al.), and 5,975,988 (Christianson).

Bonded abrasive articles typically include a shaped mass of abrasive particles held together by an organic, metallic, or vitrified binder. Such shaped mass can be, for example, in the form of a wheel, such as a grinding wheel or cutoff wheel. The diameter of grinding wheels typically is about one cm to over one meter; the diameter of cut off wheels about one cm to over 80 cm (more typically 3 cm to about 50 cm). The cut off wheel thickness is typically about 0.5 mm to about 5 cm, more typically about 0.5 mm to about 2 cm. The shaped mass can also be in the form, for example, of a honing stone, segment, mounted point, disc (e.g. double disc grinder) or other conventional bonded abrasive shape. Bonded abrasive articles typically comprise about 3 to 50 percent by volume of bond material, about 30 to 90 percent by volume abrasive particles (or abrasive particle blends), up to 50 percent by volume additives (including grinding aids), and up to 70 percent by volume pores, based on the total volume of the bonded abrasive article.

An exemplary form is a grinding wheel. Referring to FIG. 3, grinding wheel 300 according to the present disclosure includes abrasive particles 340 according to the present disclosure, retained by a binder material 330, molded into a wheel, and mounted on hub 320.

Further details regarding bonded abrasive articles can be found, for example, in U.S. Patent Nos. 4,543,107 (Rue), U.S. Patent No. 4,741,743 (Narayanan et al.), U.S. Patent No. 4,800,685 (Haynes et al.), U.S. Patent No. 4,898,597 (Hay et al.); 4,997,461 (Markhoff-Matheny et al.); 5,037,453 (Narayanan et al.); and U.S. Patent No. 5,863,308 (Qi et al.).

Nonwoven abrasive articles typically include an open porous lofty polymer filament structure having abrasive particles according to the present disclosure distributed throughout the structure and adherently bonded therein by an organic binder. Examples of filaments include polyester fibers, polyamide fibers, and polyaramid fibers. In FIG. 4, a schematic depiction, enlarged about 100x, of an exemplary nonwoven abrasive article 400 according to the present disclosure is provided. Such a nonwoven abrasive article according to the present disclosure comprises a lofty open nonwoven fiber web 450 (substrate) onto which abrasive particles 440 according to the present disclosure are adhered by binder material 460.

Further details regarding nonwoven abrasive articles can be found, for example, in U.S. Patent Nos. 2,958,593 (Hoover et al.); 4,227,350 (Fitzer); 4,991,362 (Heyer et al.); 5,712,210 (Windisch et al.); 5,591,239 (Edblom et al.); 5,681,361 (Sanders); 5,858,140 (Berger et al.); 5,928,070 (Lux); and U.S. Pat. No. 6,017,831 (Beardsley et al.).

Useful abrasive brushes include those having a plurality of bristles unitary with a backing (see, e.g., U.S. Patent Nos. 5,443,906 (Pihl et al.); 5,679,067 (Johnson et al.); and 5,903,951 (Ionta et al.). Preferably, such brushes are made by injection molding a mixture of polymer and abrasive particles.

Suitable binder materials include organic binders such as, for example, thermosetting organic polymers. Examples of suitable thermosetting organic polymers include phenolic resins, ureaformaldehyde resins, melamine-formaldehyde resins, urethane resins, acrylate resins, polyester resins, aminoplast resins having pendant alpha, beta-unsaturated carbonyl groups, epoxy resins, acrylated urethane, acrylated epoxies, and combinations thereof. The binder and/or abrasive article may also include additives such as fibers, lubricants, wetting agents, thixotropic materials, surfactants, pigments, dyes, antistatic agents (e.g., carbon black, vanadium oxide, graphite, etc.), coupling agents (e.g., silanes, titanates, zircoaluminates, etc.), plasticizers, suspending agents, and the like. The amounts of these optional additives are selected to provide the preferred properties. The coupling agents can improve adhesion to the abrasive particles and/or filler. The binder chemistry may be thermally cured, radiation cured or combinations thereof. Additional details on binder chemistry may be found in U.S. Patent No. 4,588,419 (Caul et al.), U.S. Patent No. 4,751,138 (Tumey et al.), and U.S. Patent No. 5,436,063 (Follett et al.).

More specifically with regard to vitrified bonded abrasives, vitreous bonding materials, which exhibit an amorphous structure and are typically hard, are well known in the art. In some cases, the vitreous bonding material includes crystalline phases. Bonded, vitrified abrasive articles according to the present disclosure may be in the shape of a wheel (including cut off wheels), honing stone, mounted pointed or other conventional bonded abrasive shape. An exemplary vitrified bonded abrasive article according to the present disclosure is a grinding wheel.

Examples of metal oxides that are used to form vitreous bonding materials include: silica, silicates, alumina, soda, calcia, potassia, titania, iron oxide, zinc oxide, lithium oxide, magnesia, boria, aluminum silicate, borosilicate glass, lithium aluminum silicate, combinations thereof, and the like. Typically, vitreous bonding materials can be formed from composition comprising from 10 to 100 percent glass frit, although more typically the composition comprises 20 to 80 percent glass frit, or 30 to 70 percent glass frit. The remaining portion of the vitreous bonding material can be a non-frit material. Alternatively, the vitreous bond may be derived from a non-frit containing composition. Vitreous bonding materials are typically matured at a temperature(s) in a range of about 700°C to about 1500°C, usually in a range of about 800°C to about 1300°C, sometimes in a range of about 900°C to about 1200°C, or even in a range of about 950°C to about 1100°C The actual temperature at which the bond is matured depends, for example, on the particular bond chemistry.

In some embodiments, vitrified bonding materials may include those comprising silica, alumina (preferably, at least 10 percent by weight alumina), and boria (preferably, at least 10 percent by weight boria). In most cases the vitrified bonding material further comprises alkali metal oxide(s) (e.g., Na₂O and K₂O) (in some cases at least 10 percent by weight alkali metal oxide(s)).

Binder materials may also contain filler materials or grinding aids, typically in the form of a particulate material. Typically, the particulate materials are inorganic materials. Examples of useful fillers for this disclosure include: metal carbonates (e.g., calcium carbonate (e.g., chalk, calcite, marl, travertine, marble and limestone), calcium magnesium carbonate, sodium carbonate, magnesium carbonate), silica (e.g., quartz, glass beads, glass bubbles and glass fibers) silicates (e.g., talc, clays, (montmorillonite) feldspar, mica, calcium silicate, calcium metasilicate, sodium aluminosilicate, sodium silicate) metal sulfates (e.g., calcium sulfate, barium sulfate, sodium sulfate, aluminum sodium sulfate, aluminum sulfate), gypsum, vermiculite, wood flour, aluminum trihydrate, carbon black, metal oxides (e.g., calcium oxide (lime), aluminum oxide, titanium dioxide), and metal sulfites (e.g., calcium sulfite).

In general, the addition of a grinding aid increases the useful life of the abrasive article. A grinding aid is a material that has a significant effect on the chemical and physical processes of abrading, which results in improved performance. Grinding aids encompass a wide variety of different materials and can be inorganic or organic based. Examples of chemical groups of grinding aids include waxes, organic halide compounds, halide salts and metals and their alloys. The organic halide compounds will typically break down during abrading and release a halogen acid or a gaseous halide compound. Examples of such materials include chlorinated waxes like tetrachloronaphthalene, pentachloronaphthalene, and polyvinyl chloride. Examples of halide salts include sodium chloride, potassium cryolite, sodium cryolite, ammonium cryolite, potassium tetrafluoroborate, sodium tetrafluoroborate, silicon fluorides, potassium chloride, and magnesium chloride. Examples of metals include, tin, lead, bismuth, cobalt, antimony, cadmium, and iron titanium. Other miscellaneous grinding aids include sulfur, organic sulfur compounds, graphite, and metallic sulfides. A combination of different grinding aids may be used, and in some instances this may produce a synergistic effect.

Grinding aids can be particularly useful in coated abrasive and bonded abrasive articles. In coated abrasive articles, grinding aid is typically used in the supersize coat, which is applied over the surface of the abrasive particles. Sometimes, however, the grinding aid is added to the size coat. Typically, the amount of grinding aid incorporated into coated abrasive articles are about 50-300 g/m² (preferably, about 80-160 g/m²). In vitrified bonded abrasive articles grinding aid is typically impregnated into the pores of the article.

The abrasive articles can contain 100 percent abrasive particles according to the present disclosure, or blends of such abrasive particles with other abrasive particles and/or diluent particles. However, at least about 2 percent by weight, preferably at least about 5 percent by weight, and more preferably about 30 percent to 100 percent by weight, of the abrasive particles in the abrasive articles should be abrasive particles according to the present disclosure.

In some instances, the abrasive particles according the present disclosure may be blended with another abrasive particles and/or diluent particles at a ratio between 5 and 75 percent by weight, about 25 to 75 percent by weight about 40 to 60 percent by weight, or about 50 to 50 percent by weight (i.e., in equal amounts by weight).

Examples of suitable conventional abrasive particles include fused aluminum oxide (including white fused alumina, heat-treated aluminum oxide and brown aluminum oxide), silicon carbide, boron carbide, titanium carbide, diamond, cubic boron nitride, garnet, fused alumina-zirconia, and sol-gel-derived abrasive particles, and the like. The conventional sol-gel-derived abrasive particles may be seeded or non-seeded. Likewise, they may be randomly shaped or have a shape associated with them, such as a rod or a triangle. In some instances, blends of abrasive particles may result in an abrasive article that exhibits improved grinding performance in comparison with abrasive articles comprising 100 percent of either type of abrasive particle.

If there is a blend of abrasive particles, the abrasive particle types forming the blend may be of the same size. Alternatively, the abrasive particle types may be of different particle sizes. For example, the larger sized abrasive particles may be abrasive particles according to the present disclosure, with the smaller sized particles being another abrasive particle type. Conversely, for example, the smaller sized abrasive particles may be abrasive particles according to the present disclosure, with the larger sized particles being another abrasive particle type.

Examples of suitable diluent particles include marble, gypsum, flint, silica, iron oxide, aluminum silicate, glass (including glass bubbles and glass beads), alumina bubbles, alumina beads, and diluent agglomerates.

Abrasive particles according to the present disclosure can also be combined in or with abrasive agglomerates. Abrasive agglomerate particles typically comprise a plurality of abrasive particles, a binder, and optional additives. The binder may be organic and/or inorganic. Abrasive agglomerates may be randomly shape or have a predetermined shape associated with them. The shape may be, for example, a block, cylinder, pyramid, coin, or a square. Abrasive agglomerate particles typically have particle sizes ranging from about 100 to about 5000 micrometers, typically about 250 to about 2500 micrometers.

The abrasive particles may be uniformly distributed in the abrasive article or concentrated in selected areas or portions of an abrasive article. For example, in a coated abrasive, there may be two layers of abrasive particles. The first layer comprises abrasive particles other than abrasive particles according to the present disclosure, and the second (outermost) layer comprises abrasive particles according to the present disclosure. Likewise in a bonded abrasive, there may be two distinct sections of the grinding wheel. The outermost section may comprise abrasive particles according to the present disclosure, whereas the innermost section does not. Alternatively, abrasive particles according to the present disclosure may be uniformly distributed throughout the bonded abrasive article.

The present disclosure provides a method of abrading a workpiece. The method comprises: frictionally contacting abrasive particles according to the present disclosure with a surface of the workpiece, and moving at least one of the abrasive particles and the surface of the workpiece relative to the other to abrade at least a portion of the surface of the workpiece. Methods for abrading with abrasive particles according to the present disclosure include, for example, snagging (i.e., high-pressure high stock removal) to polishing (e.g., polishing medical implants with coated abrasive belts), wherein the latter is typically done with finer grades (e.g., ANSI 220 and finer) of abrasive particles. The abrasive particles may also be used in precision abrading applications such as grinding cam shafts with vitrified bonded wheels. The size of the abrasive particles used for a particular abrading application will be apparent to those skilled in the art.

Abrading may be carried out dry or wet. For wet abrading, the liquid may be introduced supplied in the form of a light mist to complete flood. Examples of commonly used liquids include: water, water-soluble oil, organic lubricant, and emulsions. The liquid may serve to reduce the heat associated with abrading and/or act as a lubricant. The liquid may contain minor amounts of additives such as bactericide, antifoaming agents, and the like.

Examples of workpieces include aluminum metal, carbon steels, mild steels (e.g., 1018 mild steel and 1045 mild steel), tool steels, stainless steel, hardened steel, titanium, glass, ceramics, wood, wood-like materials (e.g., plywood and particle board), paint, painted surfaces, organic coated surfaces and the like. The applied force during abrading typically ranges from about 1 to about 100 kilograms (kg), although other pressures can also be used.

Objects and advantages of this disclosure are further illustrated by the following non-limiting examples, but the particular materials and amounts thereof recited in these examples, as well as other conditions and details, should not be construed to unduly limit this disclosure.

### SELECT EMBODIMENTS OF THE PRESENT DISCLOSURE

In embodiment 1, the present disclosure provides abrasive particles, wherein each of the abrasive particles comprises an alpha-alumina crystalline phase and from 0.25 to 20 percent by weight of a beta-alumina crystalline phase, based on the total weight of the alpha-alumina crystalline phase and the beta-alumina crystalline phase combined, wherein the beta-alumina crystalline phase is represented by the empirical formula XQAl₁₀O₁₇, wherein:
X is selected from the group consisting of Sr and Ba; and
Q is selected from the group consisting of Mg, Co, Ni, and Zn.

In embodiment 2, the present disclosure provides abrasive particles according to embodiment 1, wherein each of the abrasive particles comprises less than 10 percent by weight of magnetoplumbite crystalline phases.

In embodiment 3, the present disclosure provides abrasive particles according to embodiment 1 or 2, wherein the abrasive particles comprise from 0.04 to 2.60 percent by weight of XO, and from 0.01 to 4.5 percent by weight of QO.

In embodiment 4, the present disclosure provides abrasive particles according to any one of embodiments 1 to 3, wherein the abrasive particles comprise seed particles selected from the group consisting of alpha-alumina, iron oxide and precursors thereof, and chromia and precursors thereof.

In embodiment 5, the present disclosure provides abrasive particles according to any one of embodiments 1 to 4, wherein the abrasive particles have a density of at least 3.7 g/cm³ and a hardness of at least 19 GPa.

In embodiment 6, the present disclosure provides abrasive particles according to any one of embodiments 1 to 5, wherein each abrasive particle contains less than 0.1 percent by weight of rare earth oxide.

In embodiment 7, the present disclosure provides abrasive particles according to any one of embodiments 1 to 6, wherein the abrasive particles comprise shaped abrasive particles.

In embodiment 8, the present disclosure provides abrasive particles according to any one of embodiments 1 to 6, wherein the abrasive particles comprise precisely-shaped abrasive particles.

In embodiment 9, the present disclosure provides abrasive particles according to any one of embodiments 1 to 6, wherein the abrasive particles comprise crushed abrasive particles.

In embodiment 10, the present disclosure provides abrasive particles according to any one of embodiments 1 to 9, wherein the abrasive particles conform to an abrasives industry specified nominal grade.

In embodiment 11, the present disclosure provides abrasive particles according to embodiment 10, wherein the abrasives industry specified nominal grade is selected from the group consisting of ANSI 4, ANSI 6, ANSI 8, ANSI 16, ANSI 24, ANSI 36, ANSI 40, ANSI 50, ANSI 60, ANSI 80, ANSI 100, ANSI 120, ANSI 150, ANSI 180, ANSI 220, ANSI 240, ANSI 280, ANSI 320, ANSI 360, ANSI 400, and ANSI 600.

In embodiment 12, the present disclosure provides abrasive particles according to embodiment 10, wherein the abrasives industry specified nominal grade is selected from the group consisting of P8, P12, P16, P24, P36, P40, P50, P60, P80, P100, P120, P150, P180, P220, P320, P400, P500, P600, P800, P1000, and P1200.

In embodiment 13, the present disclosure provides abrasive particles according to embodiment 10, wherein the abrasives industry specified nominal grade is selected from the group consisting of JIS8, JIS12, JIS16, JIS24, JIS36, JIS46, JIS54, JIS60, JIS80, JIS100, JIS150, JIS180, JIS220, JIS240, JIS280, JIS320, JIS360, JIS400, JIS400, JIS600, JIS800, JIS1000, JIS1500, JIS2500, JIS4000, JIS6000, JIS8000, and JIS 10,000.

In embodiment 14, the present disclosure provides a method of abrading a workpiece, the method comprising:
frictionally contacting abrasive particles according to any one of embodiments 1 to 13 with a surface of the workpiece, and
moving at least one of the abrasive particles and the surface of the workpiece relative to the other to abrade at least a portion of the surface of the workpiece.

In embodiment 15, the present disclosure provides a method of abrading a workpiece according to embodiment 14, wherein the workpiece comprises stainless steel.

In embodiment 16, the present disclosure provides an abrasive article comprising the abrasive particles of any one of embodiments 1 to 13 retained in a binder material.

In embodiment 17, the present disclosure provides an abrasive article according to embodiment 16, wherein the binder material is disposed on a substrate.

In embodiment 18, the present disclosure provides an abrasive article according to embodiment 16 or 17, wherein the abrasive article comprises an abrasive layer comprising the abrasive particles and the binder material secured to a major surface of a backing, and wherein the abrasive layer comprises a make coat and a size coat.

In embodiment 19, the present disclosure provides an abrasive article according to embodiment 16 or 17, wherein the abrasive article comprises an abrasive layer comprising the abrasive particles and the binder material secured to a major surface of a backing, and wherein the abrasive layer comprises a plurality of shaped abrasive composites.

In embodiment 20, the present disclosure provides an abrasive article according to embodiment 17, wherein the substrate comprises a lofty open nonwoven fiber web.

In embodiment 21, the present disclosure provides an abrasive article according to embodiment 16, wherein the abrasive article comprises a bonded abrasive article.

In embodiment 22, the present disclosure provides a method of making abrasive particles, the method comprising:
providing a dispersion comprising an alumina precursor material, wherein the alumina precursor material comprises:
   aluminum ions;
   at least one first divalent cation selected from the group consisting of Sr and Ba; and
   at least one second divalent cation selected from the group consisting of Mg, Co, Ni, and Zn;
combining seed particles with the dispersion, wherein the seed particles comprise a nucleating agent or a precursor thereof that facilitates conversion of the alumina precursor material to alpha-alumina;
converting the dispersion to abrasive precursor particles; and
sintering the abrasive precursor particles to provide the abrasive particles, wherein each of the abrasive particles comprises an alpha-alumina crystalline phase and from 0.25 to 20 percent by weight of a beta-alumina crystalline phase, based on the total weight of the alpha-alumina crystalline phase and the beta-alumina crystalline phase combined.
In embodiment 23, the present disclosure provides a method according to embodiment 22, wherein each of the abrasive particles comprises less than 10 percent by weight of magnetoplumbite crystalline phases.

In embodiment 24, the present disclosure provides a method according to embodiment 22 or 23, wherein the beta-alumina crystalline phase is represented by the empirical formula XQAl₁₀O₁₇, wherein:
X represents the first divalent cations and is selected from the group consisting of Sr and Ba; and
Q represents the second divalent cations and is selected from the group consisting of Mg, Co, Ni, Zn and combinations thereof.

In embodiment 25, the present disclosure provides a method according to any one of embodiments 22 to 24, wherein said converting the dispersion to abrasive precursor particles comprises a drying step.

In embodiment 26, the present disclosure provides a method according to any one of embodiments 22 to 24, wherein said converting the dispersion to abrasive precursor particles comprises a drying step followed by a calcining step.

In embodiment 27, the present disclosure provides a method according to any one of embodiments 22 to 26, wherein the seed particles comprise at least one of alpha-alumina, alpha-Fe₂O₃, alpha-Cr₂O₃, or a precursor thereof.

### EXAMPLES

Unless otherwise noted, all parts, percentages, ratios, etc. in the Examples and the rest of the specification are by weight. In the tables below, "nm" means not measured.

A summary of various raw materials used to prepare the examples is provided in Table 1 (below).

**TABLE 1**

| RAW MATERIALS | EQUIVALENT PERCENT BY WEIGHT AS OXIDE IN SOLUTION | SOURCE |
|---|---|---|
| Sr(NO₃)₂ solution | 20 | Macron Fine Chemicals, Center Valley, PA |
| Mg(NO₃)₂ solution | 10.5 | Hawkins, Inc, St Paul, MN |
| Zn(NO₃)₂ solution | 24.1 | Mineral Research and Development Co., Harrisburg, NC |
| Ca(NO₃)₂ solution | 20 | Fisher Scientific, Pittsburg, PA |
| Co(NO₃)₂ solution | 15 | Fisher Scientific, Pittsburg, PA |
| Ni(NO₃)₂ solution | 15 | Fisher Scientific, Pittsburg, PA |
| Ba(NO₃)₂ solution | 20 | Fisher Scientific, Pittsburg, PA |
| iron oxide seed | 5 | iron oxyhydroxide (alpha-FEOOH), aqueous dispersion (pH = 5.0-5.5), about 90-95% of which is goethite, acicular particles with an average particle size of about 0.05 to 0.1 micrometer, a length to diameter or width ratio of about 1:1 to 3:1, and a surface area of about 100 m²/g; dispersion yields 3% to 7% by weight Fe₂O₃ |
| Al₂O₃ seed | 20 | prepared according to paragraph [0024] of U.S. Patent Appln. Publ. 2008/0148653 A1 (Bauer et al.) |
| ZrO₂ solution | 20 | 20% by weight zirconia solution, obtained from MEL Chemicals, Inc., Flemington, New Jersey as BACOTE 20 |
| Resole Phenolic Resin | | metal hydroxide catalyzed phenol-formaldehyde resin, ca. 75 percent in water |
| Epoxy Resin | | EPON 828 epoxy resin obtained from Momentive Specialty Chemicals, Columbus, Ohio |
| Filler | | calcium carbonate having a particle size less than 46 micrometers and an average particle size of about 15 micrometers, obtained as GEORGIA MARBLE NO. 10 from Georgia Marble, Gantts Quarry, Alabama |
| Grinding aid 1 | | cryolite, obtained as RTN Cryolite from TR International Trading Co., Houston, Texas |
| Grinding aid 2 | | Potassium tetrafluoroborate obtained from Solvay Fluorides LLC, Houston, Texas |
| Surfactant 1 | | 0.5 percent ethoxylated oleic acid surfactant, obtained as EMULON A from BASF Corp., Mount Olive, New Jersey |
| Surfactant 2 | | AEROSOL OT-NV surfactant obtained from Cytec Industries, Woodland Park, New jersey |
| Curing Agent | | IMICURE EMI 24 curing agent obtained from Air Products and Chemicals, Allentown, Pennsylvania |
| Anti-foam | | ANTIFOAM 1430 antifoaming agent obtained from Dow Corning Corporation, Midland, Michigan |

### ABRASIVE DISC PREPARATION METHOD

Discs with a 7-inch (17.8 cm) diameter and 7/8-inch (2.2-cm) diameter arbor holes of a vulcanized fiber backing having a thickness of 0.83 mm (33 mils) (obtained as DYNOS VULCANIZED FIBRE from DYNOS GmbH, Troisdorf, Germany) were coated with 3.5 grams/disc (g/disc) of a make coat composition consisting of 49.15 parts by weight of Resole Phenolic Resin, 40.56 parts by weight of Filler, 0.1 part Surfactant1, and 10.19 parts by weight of water. The discs were then electrostatically coated with 15.0 g/disc of abrasive particles, and then 13.0 g/disc of a size coat composition consisting of 29.42 parts by weight of Resole Phenolic Resin, 50.65 parts by weight of Grinding Aid 1, 1.81 parts by weight of Surfactant 1, and 18.12 parts by weight of water. The discs were then heated at 90°C for 90 minutes. The partially-cured discs were then further coated with 10 grams of a supersize coat consisting of 30.96 parts by weight of Epoxy Resin, 56.34 parts by weight of Grinding Aid 2, 0.78 part Surfactant 2, 0.36 part Curing Agent, 0.04 part Anti-foam, and 11.52 parts by weight of water. Following curing at 102°C for 10 hours, the resultant abrasive discs were flexed.

### GRINDING TEST

Abrasive discs were tested using the following procedure. Abrasive discs for evaluation, 7-inch (17.8-cm) diameter, were attached to a rotary grinder fitted with a 7-inch (17.8-cm) ribbed disc pad face plate (80514 EXTRA HARD RED obtained from 3M Company, St. Paul, Minnesota). The grinder was then activated and urged against an end face of a 0.75 in x 0.75 in (1.9 cm x 1.9 cm) pre-weighed 304 stainless steel bar under a load of 12 lbs (5.5 kg). The resulting rotational speed of the grinder under this load and against this workpiece was 5000 rpm. The workpiece was abraded under these conditions for a total of twenty-five (25) 12-second grinding intervals (passes). Following each 12-second interval, the workpiece was allowed to cool to room temperature and weighed to determine the cut of the abrasive operation. Test results were reported as the total cut (average of at least three abrasive discs) and cut expressed as a percent of a control disc (described below). The control disc was prepared as by the above procedure, except using abrasive particles made identically to those of Example 1, with the exception that the sol-gel modifiers included in the abrasive particles were 1.2% MgO, 2.4% La₂O₃, and 1.2% Y₂O₃.

### HARDNESS TEST

The Vickers microhardness of the abrasive grains was measured using a conventional microhardness tester with a diamond indenter (commercially available as MINILOAD 2 MICROHARDNESS TESTER from E. Leitz GmbH, Wetzlar, Germany). The indenter (a highly polished pointed square pyramidal diamond with a face angle of 136 degrees) was brought into contact gradually and smoothly with the sample to be measured. The predetermined load was 500 grams. The average of 10 measurements was reported for each example.

### CONDITIONS FOR FIRING/SINTERING AFTER CALCINING

Calcined abrasive grain precursor was fed into a rotary sintering kiln. The sintering kiln consisted of a 7.6 cm inner diameter, 1.22 meters long silicon carbide tube inclined with respect to the horizontal and had a 35 cm hot zone. The heat was applied externally via SiC electric heating elements. The various examples were fired at the conditions shown in Table 2 with the rotary sintering kiln operating at either 7.0 rpm at an inclination of 5.8 degrees (designated "FF" in Table 2) or 3.0 rpm at an inclination of 2.9 degrees (designated "SF" in Table 2).

The product exited the kiln into room temperature air, where it was collected in a metal container and allowed to cool to room temperature.

### EXAMPLES 1 THROUGH 3

Example 1 was shaped abrasive particles prepared from alumina sol-gel without incorporating seed. The shaped abrasive particles of Example 1 were made by preparing a boehmite sol-gel using the following recipe: DISPERAL aluminum oxide monohydrate powder (1600 parts by weight, from Sasol North America) was dispersed by high shear mixing a solution containing water (2400 parts by weight) and 70% aqueous nitric acid (72 parts by weight) for 11 minutes. The resulting sol-gel was aged for at least 1 hour before coating. The sol-gel was forced into production tooling having triangular shaped mold cavities of 28 mils (0.71 mm) depth and 110 mils (2.78 mm) on each side. The draft angle between the sidewall and bottom of the mold was 98 degrees. The tooling was manufactured to have 50% of the mold cavities with 8 parallel ridges rising from the bottom surfaces of the cavities that intersected with one side of the triangle at a 90 degree angle and the remaining cavities had a smooth bottom mold surface. The parallel ridges were spaced every 0.277 mm and the cross section of the ridges was a triangle shape having a height of 0.0127 mm and a 45 degree angle between the sides of each ridge at the tip. A mold release agent, 1% peanut oil in methanol was used to coat the production tooling with about 0.5 mg/in² of peanut oil applied to the production tooling. The excess methanol was removed by placing sheets of the production tooling in an air convection oven for 5 minutes at 45°C. The sol-gel was forced into the cavities with a putty knife so that the openings of the production tooling were completely filled. The sol-gel coated production tooling was placed in an air convection oven at 45°C for at least 45 minutes to dry. The precursor shaped abrasive particles were removed from the production tooling by passing it over an ultrasonic horn. The precursor shaped abrasive particles were calcined at approximately 650°C and then saturated with a mixed nitrate solution to the concentrations (reported as oxides) in Table 2. The saturated precursor shaped abrasive particles were allowed to dry after which the particles were again calcined at 650°C and sintered at approximately 1400°C. Both the calcining and sintering was performed using rotary tube kilns. The resulting sintered abrasive particles exited the kiln into room temperature air where it was collected in a metal container and allowed to cool to room temperature.

The densities of the fired, sintered abrasive particles were determined using a Micromeritics (Norcross, Georgia) ACCUPYC 1330 helium pycnometer. The results are reported in Table 3.

Examples 2 and 3 and Comparative Example A were prepared identically to Example 1, except that the modifier composition was changed as shown in Table 2. The particles of Example 3 were tested according to the Hardness Test. Test results are shown in Table 3. A portion of the sintered shaped abrasive particles of Example 3 were incorporated into coated abrasive discs using conventional coated abrasive-making procedures and tested according to the Grinding Test.

### EXAMPLES 4- 9

Examples 4-9 were prepared identically to Example 1, except that the modifier composition was changed, Fe₂O₃ seed was added, and the firing conditions were changed, all as shown in Table 2. These beta-alumina containing examples were all seeded, and achieved much higher densities and hardness. As reported in Table 3, grinding performance exceeded the non-seeded Example 3 in all cases, and met or exceeded the control disc in 2 cases.

### EXAMPLES 10-15

Examples 10-15 were prepared as unshaped (crushed) particles with varying levels of Fe₂O₃ seed, and the firing conditions as shown in Table 2. Example 15 was seeded with Al₂O₃. The examples were made by preparing a boehmite sol-gel using the following recipe: aluminum oxide monohydrate powder (800 parts by weight) available as DISPERAL from Sasol North America was dispersed by high shear mixing into a solution containing water (1800 parts by weight) and 70% aqueous nitric acid (44 parts by weight) for 1 minute. The sol was poured into a 22 cm by 33 cm by 5 cm PYREX tray and dried in a forced air oven at 100°C for about 24 hours. The resulting dried material was crushed using a Braun type UD pulverizer having a 1.1 mm gap between the steel plates to form particles. The particles were screened to provide 0.125 to 1 mm sized particles.

The precursor shaped abrasive particles were calcined at approximately 650°C and then saturated with a mixed nitrate solution of the following concentration (reported as oxides): 3.0% of ZnO, and 1.5 % SrO. The saturated precursor abrasive particles were allowed to dry after which the particles were again calcined at 650°C and sintered at 1400°C (SF conditions).

From the results in Table 3, it is seen that densities and hardness increase with increasing seed levels with 19 GPa hardness achieved at the 0.3% level. Alumina seeding in Example 15 also achieved a high hardness level at 21.2 GPa.

### EXAMPLES 16-19

Examples 16-19 were prepared identically to Example 1 with the exception of the modifier composition changes and the firing condition changes shown in Table 2. Examples 16-19 were fired under the SF conditions. Results are reported in Table 3. The longer firing times from the SF conditions allowed the grain to densify at lower temperatures with a 3.90 g/cm³ density achieved as low as 1340°C.

### EXAMPLES 20-34 (Example 34: reference) AND COMPARATIVE EXAMPLES B THROUGH F

Examples 20-34 were prepared identically to Example 1, with the exception of the modifier composition changes and the firing condition changes shown in Table 2. It is generally seen that lower amounts of SrO with higher amounts of ZnO provide the best grinding performance and that FF conditions grind better than SF conditions.

Comparative Examples B through F were prepared identically to Example 1, with the exception of the modifier composition changes and the firing condition changes, including the absence of a spinel former as shown in Table 2, thus creating magnetoplumbite phases (SrAl₁₂O₁₉ or CaAl₁₂O₁₉). As can be seen in Table 3, examples with magnetoplumbite phases also ground better under FF conditions, but less than their beta-alumina counterparts.

Comparative Example F was prepared identically to Example 1, with the exception that the only modifier was Fe₂O₃ seed. This was a seeded example with no modifiers. As can be seen in Table 3, its physical properties are good, but grinding is lower than many of the beta-alumina containing examples.

### EXAMPLES 35-39

Examples 35-39 were prepared identically to Example 1, with the exception of the modifier composition changes and the firing condition changes shown in Table 2.

These examples are similar to Examples 20-24, except that an equivalent mole % of MgO is used in place of ZnO. As can be seen from Table 3, by a comparison of Examples 35-39 to Examples 20-24, grain containing MgO grinds better.

### EXAMPLES 40-43

Examples 40-43 were prepared identically to Example 1 with the exception of the modifier composition changes and the firing condition changes as shown in Table 2. These examples demonstrate the use of various amounts of SrO and MgO, and showed good performance, as reported in Table 3.

### EXAMPLES 44-49

Examples 44-49 were prepared identically to Example 1, with the exception of the modifier composition changes and the firing condition changes shown in Table 2. Examples 44-48 are SF versions of Examples 35-39. As can be seen in Table 3, grinding performances were very similar.

Example 49 was a FF version of Example 48 at 1410°C, which compares to the more usual 1390°C. As can be seen in Table 3, physical properties are similar.

### EXAMPLES 50-52

Examples 50-52 were prepared identically to Example 10-15, with the exception of the modifier composition changes, the presence of Al₂O₃ seed instead of Fe₂O₃, and the firing condition changes shown in Table 2. As can be seen in Table 3, FF conditions sustain a high hardness even when producing particles with a noticeably lower density.

### EXAMPLES 53-56

Examples 53-56 were prepared identically to Example 1, with the exception of the modifier composition changes and the firing condition changes shown in Table 2. ZnO and MgO are the most common and least expensive spinel formers with Al₂O₃ that can be accommodated in the beta-alumina phase. Table 3 demonstrates that Examples 53-56 show that other spinel formers also work, e.g., CoO and NiO.

### EXAMPLES 57-61

Examples 57-61 were prepared identically to Example 1 with the exception of the modifier composition changes and the firing condition changes as shown in Table 2, and the production tool cavity side dimensions were diminished to 54 mils (1.37 mm).
These examples show the effect of the amount of Fe₂O₃ seed particles present on grinding performance. As can be seen in Table 3, lower levels of seed particles were generally better, with performance dropping off rapidly at the higher level.

### EXAMPLES 62-64 (reference)

Examples 62-64 were prepared identically to Example 1, with the exception of the modifier composition changes and the firing condition changes shown in Table 2. These examples utilized CaO as the beta-alumina former. Grinding was equivalent to the control disc.

### EXAMPLES 65-67 AND COMPARATIVE EXAMPLE G

Examples 65-67 and Comparative Example G were prepared identically to Example 1, with the exception of the modifier composition changes and the firing condition changes shown in Table 2. As can be seen in Table 3, it is seen that a relatively small amounts of SrO affect grinding performance, with a slight increase seen at even the 0.05% level. Grinding performance increases rapidly with increases in SrO content.

### EXAMPLES 68-72 AND COMPARATIVE EXAMPLE H

Examples 68-72 and Comparative Example H were prepared identically to Example 1, with the exception of the modifier composition changes and the firing condition changes shown in Table 2, and the production tool cavity side dimensions were diminished to 54 mils (1.37 mm). These were Al₂O₃-seeded examples. As can be seen in Table 3, Example 70, with 0.3% SrO and 2.0% MgO, is superior to Comparative Example H.

### EXAMPLE 73

Example 73 was prepared identically to Example 1, with the exception of the modifier composition changes and the firing condition changes shown in Table 2, and the production tool cavity side dimensions were diminished to 54 mils (1.37 mm). Example 73 was made with BaO as the beta-alumina former (BaMgAl₁₀O₁₇)- It fired well with a finished density of 3.888 g/cm³.

### EXAMPLE 74

Example 74 was prepared identically to Example 10, with the exception of the modifier composition changes and the firing condition changes shown in Table 2, and the particles were crushed instead of shaped, as described in Example 10. Test results reported in Table 3 should be compared to Comparative Example I.

### COMPARATIVE EXAMPLE I

This comparative example was CUBITRON 321, grade 36, crushed abrasive grain (rare earth oxide-containing alpha alumina) available from 3M Company.

### EXAMPLES 75-78

Examples 75-78 were prepared identically to Example 1, with the exception of the modifier composition changes and the firing condition changes shown in Table 2. ZrO₂ was added to examples 76-78 at the levels indicated in Table 2. As can be seen in Table 3, Examples 75-78 performed better than the control disc in the Grinding Test.

Table 2 reports composition and firing conditions for the above Examples.

Abrasive discs were made using the above abrasive particles according to the Abrasive Disc Preparation Method. Table 3 reports physical properties and Grinding Test results for the abrasive discs.

**TABLE 2**

| EXAMPLE | ADDED MODIFIER(S), percent by weight based on total weight of abrasive particle | | | | | | | | | | FIRING CONDITIONS | |
|---|---|---|---|---|---|---|---|---|---|---|---|---|
| | SrO | MgO | ZnO | CaO | CoO | NiO | BaO | ZrO | Fe₂O₃ seed | Al₂O₃ seed | SF/FF | Firing Temp, °C |
| 1 | 1.6 | 1 | 0 | 0 | 0 | 0 | 0 | 0 | 0 | 0 | SF | 1390 |
| Comparative Example A | 1.6 | 0 | 0 | 0 | 0 | 0 | 0 | 0 | 0 | 0 | SF | 1390 |
| 2 | 2 | 3 | 0 | 0 | 0 | 0 | 0 | 0 | 0 | 0 | SF | 1390 |
| 3 | 1.5 | 0 | 3 | 0 | 0 | 0 | 0 | 0 | 0 | 0 | SF | 1390 |
| 4 | 1 | 0 | 3 | 0 | 0 | 0 | 0 | 0 | 1.8 | 0 | FF | 1400 |
| 5 | 2 | 0 | 2 | 0 | 0 | 0 | 0 | 0 | 1.8 | 0 | FF | 1400 |
| 6 | 1.5 | 0 | 3 | 0 | 0 | 0 | 0 | 0 | 1.8 | 0 | FF | 1400 |
| 7 | 1.5 | 1.5 | 0 | 0 | 0 | 0 | 0 | 0 | 1.8 | 0 | FF | 1400 |
| 8 | 2 | 0 | 3 | 0 | 0 | 0 | 0 | 0 | 1.8 | 0 | FF | 1400 |
| 9 | 2.5 | 0 | 3 | 0 | 0 | 0 | 0 | 0 | 1.8 | 0 | FF | 1400 |
| 10 | 1.5 | 0 | 3 | 0 | 0 | 0 | 0 | 0 | 0.01 | 0 | FF | 1400 |
| 11 | 1.5 | 0 | 3 | 0 | 0 | 0 | 0 | 0 | 0.10 | 0 | FF | 1400 |
| 12 | 1.5 | 0 | 3 | 0 | 0 | 0 | 0 | 0 | 0.3 | 0 | FF | 1400 |
| 13 | 1.5 | 0 | 3 | 0 | 0 | 0 | 0 | 0 | 0.75 | 0 | FF | 1400 |
| 14 | 1.5 | 0 | 3 | 0 | 0 | 0 | 0 | 0 | 1 | 0 | FF | 1400 |
| 15 | 1.5 | 0 | 3 | 0 | 0 | 0 | 0 | 0 | 0 | 2 | FF | 1400 |
| 16 | 1.5 | 0 | 3 | 0 | 0 | 0 | 0 | 0 | 1.8 | 0 | SF | 1350 |
| 17 | 1.5 | 0 | 3 | 0 | 0 | 0 | 0 | 0 | 1.8 | 0 | SF | 1340 |
| 18 | 1.5 | 0 | 3 | 0 | 0 | 0 | 0 | 0 | 1.8 | 0 | SF | 1330 |
| 19 | 1.5 | 0 | 3 | 0 | 0 | 0 | 0 | 0 | 1.8 | 0 | SF | 1345 |
| 20 | 0.6 | 0 | 2 | 0 | 0 | 0 | 0 | 0 | 1.8 | 0 | FF | 1390 |
| 21 | 1.2 | 0 | 2 | 0 | 0 | 0 | 0 | 0 | 1.8 | 0 | FF | 1390 |
| 22 | 0.6 | 0 | 3 | 0 | 0 | 0 | 0 | 0 | 1.8 | 0 | FF | 1390 |
| 23 | 1.2 | 0 | 3 | 0 | 0 | 0 | 0 | 0 | 1.8 | 0 | FF | 1390 |
| 24 | 0.9 | 0 | 2.5 | 0 | 0 | 0 | 0 | 0 | 1.8 | 0 | FF | 1390 |
| 25 | 0.6 | 0 | 2 | 0 | 0 | 0 | 0 | 0 | 1.8 | 0 | SF | 1335 |
| 26 | 1.2 | 0 | 2 | 0 | 0 | 0 | 0 | 0 | 1.8 | 0 | SF | 1335 |
| 27 | 0.6 | 0 | 3 | 0 | 0 | 0 | 0 | 0 | 1.8 | 0 | SF | 1335 |
| 28 | 1.2 | 0 | 3 | 0 | 0 | 0 | 0 | 0 | 1.8 | 0 | SF | 1335 |
| 29 | 0.9 | 0 | 2.5 | 0 | 0 | 0 | 0 | 0 | 1.8 | 0 | SF | 1335 |
| 30 | 0.3 | 0 | 2.5 | 0 | 0 | 0 | 0 | 0 | 1.8 | 0 | FF | 1390 |
| 31 | 1.5 | 0 | 2.5 | 0 | 0 | 0 | 0 | 0 | 1.8 | 0 | FF | 1390 |
| 32 | 0.9 | 0 | 3.5 | 0 | 0 | 0 | 0 | 0 | 1.8 | 0 | FF | 1390 |
| 33 | 0.9 | 0 | 1.5 | 0 | 0 | 0 | 0 | 0 | 1.8 | 0 | FF | 1390 |
| 34 | 0 | 0 | 3 | 1 | 0 | 0 | 0 | 0 | 1.8 | 0 | FF | 1390 |
| Comparative B | 1.2 | 0 | 0 | 0 | 0 | 0 | 0 | 0 | 1.8 | 0 | FF | 1390 |
| Comparative C | 1.2 | 0 | 0 | 0 | 0 | 0 | 0 | 0 | 1.8 | 0 | SF | 1335 |
| Comparative D | 0 | 0 | 0 | 1.2 | 0 | 0 | 0 | 0 | 1.8 | 0 | FF | 1390 |
| Comparative E | 0 | 0 | 0 | 1.2 | 0 | 0 | 0 | 0 | 1.8 | 0 | SF | 1335 |
| Comparative F | 0 | 0 | 0 | 0 | 0 | 0 | 0 | 0 | 1.8 | 0 | SF | 1310 |
| 35 | 0.6 | 1 | 0 | 0 | 0 | 0 | 0 | 0 | 1.8 | 0 | FF | 1390 |
| 36 | 1.2 | 1 | 0 | 0 | 0 | 0 | 0 | 0 | 1.8 | 0 | FF | 1390 |
| 37 | 0.6 | 1.5 | 0 | 0 | 0 | 0 | 0 | 0 | 1.8 | 0 | FF | 1390 |
| 38 | 1.2 | 1.5 | 0 | 0 | 0 | 0 | 0 | 0 | 1.8 | 0 | FF | 1390 |
| 39 | 0.9 | 1.25 | 0 | 0 | 0 | 0 | 0 | 0 | 1.8 | 0 | FF | 1390 |
| 40 | 0.3 | 1.25 | 0 | 0 | 0 | 0 | 0 | 0 | 1.8 | 0 | FF | 1390 |
| 41 | 1.5 | 1.25 | 0 | 0 | 0 | 0 | 0 | 0 | 1.8 | 0 | FF | 1390 |
| 42 | 0.9 | 0.75 | 0 | 0 | 0 | 0 | 0 | 0 | 1.8 | 0 | FF | 1390 |
| 43 | 0.9 | 1.75 | 0 | 0 | 0 | 0 | 0 | 0 | 1.8 | 0 | FF | 1390 |
| 44 | 0.6 | 1 | 0 | 0 | 0 | 0 | 0 | 0 | 1.8 | 0 | SF | 1335 |
| 45 | 1.2 | 1 | 0 | 0 | 0 | 0 | 0 | 0 | 1.8 | 0 | SF | 1335 |
| 46 | 0.6 | 1.5 | 0 | 0 | 0 | 0 | 0 | 0 | 1.8 | 0 | SF | 1335 |
| 47 | 1.2 | 1.5 | 0 | 0 | 0 | 0 | 0 | 0 | 1.8 | 0 | SF | 1335 |
| 48 | 0.9 | 1.25 | 0 | 0 | 0 | 0 | 0 | 0 | 1.8 | 0 | SF | 1335 |
| 49 | 0.9 | 1.25 | 0 | 0 | 0 | 0 | 0 | 0 | 1.8 | 0 | FF | 1410 |
| 50 | 0.9 | 0 | 2.5 | 0 | 0 | 0 | 0 | 0 | 0 | 2.0 | SF | 1400 |
| 51 | 0.9 | 0 | 2.5 | 0 | 0 | 0 | 0 | 0 | 0 | 2.0 | SF | 1390 |
| 52 | 0.9 | 0 | 2.5 | 0 | 0 | 0 | 0 | 0 | 0 | 2.0 | FF | 1400 |
| 53 | 0.9 | 0 | 0 | 0 | 2.32 | 0 | 0 | 0 | 0 | 0 | FF | 1390 |
| 54 | 0.9 | 0 | 0 | 0 | 2.32 | 0 | 0 | 0 | 0 | 0 | SF | 1335 |
| 55 | 0.9 | 0 | 0 | 0 | 0 | 2.32 | 0 | 0 | 0 | 0 | FF | 1390 |
| 56 | 0.9 | 0 | 0 | 0 | 0 | 2.32 | 0 | 0 | 0 | 0 | SF | 1335 |
| 57 | 0.6 | 1.6 | 0 | 0 | 0 | 0 | 0 | 0 | 1.14 | 0 | FF | 1390 |
| 58 | 0.6 | 1.6 | 0 | 0 | 0 | 0 | 0 | 0 | 0.82 | 0 | FF | 1390 |
| 59 | 0.6 | 1.6 | 0 | 0 | 0 | 0 | 0 | 0 | 1.33 | 0 | FF | 1390 |
| 60 | 0.6 | 1.6 | 0 | 0 | 0 | 0 | 0 | 0 | 2.1 | 0 | FF | 1390 |
| 61 | 0.6 | 1.6 | 0 | 0 | 0 | 0 | 0 | 0 | 0.6 | 0 | FF | 1390 |
| 62 | 0 | 1.5 | 0 | 0.1 | 0 | 0 | 0 | 0 | 0 | 0 | FF | 1390 |
| 63 | 0 | 1.5 | 0 | 0.3 | 0 | 0 | 0 | 0 | 0 | 0 | FF | 1390 |
| 64 | 0 | 1.5 | 0 | 0.5 | 0 | 0 | 0 | 0 | 0 | 0 | FF | 1390 |
| Comparative G | 0 | 1.5 | 0 | 0 | 0 | 0 | 0 | 0 | 0 | 0 | FF | 1390 |
| 65 | 0.05 | 1.5 | 0 | 0 | 0 | 0 | 0 | 0 | 0 | 0 | FF | 1390 |
| 66 | 0.15 | 1.5 | 0 | 0 | 0 | 0 | 0 | 0 | 0 | 0 | FF | 1390 |
| 67 | 0.25 | 1.5 | 0 | 0 | 0 | 0 | 0 | 0 | 0 | 0 | FF | 1390 |
| 68 | 0.3 | 1 | 0 | 0 | 0 | 0 | 0 | 0 | 0 | 4 | FF | 1390 |
| 69 | 0.9 | 1 | 0 | 0 | 0 | 0 | 0 | 0 | 0 | 4 | FF | 1390 |
| 70 | 0.3 | 2 | 0 | 0 | 0 | 0 | 0 | 0 | 0 | 4 | FF | 1390 |
| 71 | 0.9 | 2 | 0 | 0 | 0 | 0 | 0 | 0 | 0 | 4 | FF | 1390 |
| 72 | 0.6 | 1.5 | 0 | 0 | 0 | 0 | 0 | 0 | 0 | 4 | FF | 1390 |
| Comparative H | 0 | 0 | 0 | 0 | 0 | 0 | 0 | 0 | 0 | 4 | FF | 1390 |
| 73 | 0 | 1.25 | 0 | 0 | 0 | 0 | 1.33 | 0 | 0 | 0 | FF | 1390 |
| 74 | 0.6 | 1.5 | 0 | 0 | 0 | 0 | 0 | 0 | 1.4 | 0 | FF | 1390 |
| 75 | 0.6 | 1.5 | 0 | 0 | 0 | 0 | 0 | 0 | 1.8 | 0 | FF | 1390 |
| 76 | 0.6 | 1.5 | 0 | 0 | 0 | 0 | 0 | 0.4 | 1.8 | 0 | FF | 1390 |
| 77 | 0.6 | 1.5 | 0 | 0 | 0 | 0 | 0 | 1.8 | 1.8 | 0 | FF | 1390 |
| 78 | 0.6 | 1.5 | 0 | 0 | 0 | 0 | 0 | 3.1 | 1.8 | 0 | FF | 1390 |

**TABLE 3**

| EXAMPLE | DENSITY, g/cm³ | HARDNESS, GPa | CUT, g | CUT, % of CONTROL DISC |
|---|---|---|---|---|
| 1 | 3.600 | nm | nm | nm |
| Comparative A | 3.570 | nm | nm | nm |
| 2 | 3.590 | nm | nm | nm |
| 3 | 3.590 | 16.4 | 79 | 33 |
| 4 | 3.893 | 20.9 | 310 | 127 |
| 5 | 3.816 | 19.4 | 168 | 69 |
| 6 | 3.910 | 22.4 | 226 | 93 |
| 7 | 3.839 | 22.1 | nm | nm |
| 8 | 3.865 | 20.2 | 134 | 55 |
| 9 | 3.796 | 19.4 | 129 | 53 |
| 10 | porous, density too low to accurately measure | 11.9 | nm | nm |
| 11 | porous, density too low to accurately measure | 15.0 | nm | nm |
| 12 | 3.735 | 19.2 | nm | nm |
| 13 | 3.873 | 20.8 | nm | nm |
| 14 | 3.915 | 21.9 | nm | nm |
| 15 | 3.803 | 21.2 | nm | nm |
| 16 | 3.915 | nm | nm | nm |
| 17 | 3.906 | nm | nm | nm |
| 18 | 3.884 | nm | nm | nm |
| 19 | 3.909 | nm | nm | nm |
| 20 | 3.894 | nm | 290 | 79 |
| 21 | 3.889 | nm | 214 | 59 |
| 22 | 3.903 | nm | 291 | 80 |
| 23 | 3.896 | nm | 256 | 70 |
| 24 | 3.899 | 22.2 | 283 | 78 |
| 25 | 3.900 | nm | 267 | 73 |
| 26 | 3.971 | nm | 186 | 51 |
| 27 | 3.916 | nm | 266 | 73 |
| 28 | 3.895 | nm | 207 | 57 |
| 29 | 3.910 | 23.1 | 236 | 65 |
| 30 | 3.905 | nm | 310 | 85 |
| 31 | 3.893 | nm | 247 | 68 |
| 32 | 3.917 | nm | 301 | 82 |
| 33 | 3.894 | nm | 270 | 74 |
| 34 | 3.930 | 22.6 | 324 | 89 |
| Comparative B | nm | 22.3 | 260 | 71 |
| Comparative C | 3.815 | nm | 142 | 39 |
| Comparative D | 3.814 | 20.2 | 251 | 69 |
| Comparative E | 3.743 | nm | 211 | 58 |
| Comparative F | 3.881 | nm | 247 | 68 |
| 35 | 3.839 | nm | 359 | 98 |
| 36 | 3.812 | nm | 335 | 92 |
| 37 | 3.802 | nm | 365 | 100 |
| 38 | 3.727 | nm | 302 | 83 |
| 39 | 3.809 | 22.6 | 330 | 90 |
| 40 | 3.837 | nm | 347 | 95 |
| 41 | 3.839 | nm | 309 | 85 |
| 42 | 3.856 | nm | 339 | 93 |
| 43 | 3.839 | nm | 349 | 96 |
| 44 | 3.867 | nm | 361 | 99 |
| 45 | 3.824 | nm | 283 | 78 |
| 46 | 3.827 | nm | 352 | 96 |
| 47 | 3.772 | nm | 281 | 77 |
| 48 | 3.858 | 22.8 | 354 | 97 |
| 49 | 3.841 | 22.5 | nm | nm |
| 50 | 3.922 | 23.2 | nm | nm |
| 51 | 3.900 | 22.9 | nm | nm |
| 52 | 3.819 | 22.3 | nm | nm |
| 53 | 3.897 | 21.8 | 285 | 78 |
| 54 | 3.914 | 22.9 | 265 | 73 |
| 55 | 3.867 | 22.9 | 276 | 76 |
| 56 | 3.852 | 21.7 | 222 | 61 |
| 57 | 3.858 | 23.8 | 265 | 97 |
| 58 | 3.818 | 23.4 | 404 | 148 |
| 59 | 3.866 | 24.6 | 313 | 115 |
| 60 | 3.903 | 23.8 | 54 | 20 |
| 61 | nm | nm | 267 | 98 |
| 62 | 3.830 | 22.9 | 280 | 98 |
| 63 | 3.881 | 23.4 | 292 | 99 |
| 64 | 3.881 | 23.6 | 312 | 105 |
| Comparative G | 3.829 | 23.2 | 243 | 82 |
| 65 | 3.839 | 23.6 | 249 | 84 |
| 66 | 3.825 | 23.1 | 338 | 114 |
| 67 | 3.831 | 23.3 | 325 | 110 |
| 68 | 3.860 | 22.2 | 167 | 114 |
| 69 | 3.861 | 22.0 | 218 | 149 |
| 70 | 3.858 | 21.6 | 279 | 191 |
| 71 | 3.854 | 20.7 | 237 | 162 |
| 72 | 3.863 | 21.2 | 222 | 152 |
| Comparative H | 3.852 | 21.3 | 209 | 143 |
| 73 | 3.888 | nm | nm | nm |
| 74 | 3.873 | nm | 217 | 153 |
| 75 | nm | nm | 402 | 111 |
| Comparative I | nm | nm | 142 | 100 |
| 76 | nm | nm | 445 | 123 |
| 77 | nm | nm | 425 | 118 |
| 78 | nm | nm | 442 | 122 |

The scope of the invention is defined in the appended claims.

## Claims

1. Abrasive particles, wherein each of the abrasive particles comprises an alpha-alumina crystalline phase and from 0.25 to 20 percent by weight of a beta-alumina crystalline phase, based on the total weight of the alpha-alumina crystalline phase and the beta-alumina crystalline phase combined, wherein the beta-alumina crystalline phase is represented by the empirical formula XQAl₁₀O₁₇, wherein:
X is selected from the group consisting of Sr, and Ba; and
Q is selected from the group consisting of Mg, Co, Ni, and Zn.

2. Abrasive particles according to claim 1, wherein each of the abrasive particles comprises less than 10 percent by weight of magnetoplumbite crystalline phases.

3. Abrasive particles according to claim 1, wherein the abrasive particles comprise from 0.04 to 2.60 percent by weight of XO, and from 0.01 to 4.5 percent by weight of QO.

4. Abrasive particles according to claim 1, wherein the abrasive particles comprise seed particles selected from the group consisting of alpha-alumina, iron oxide and precursors thereof, and chromia and precursors thereof.

5. Abrasive particles according to claim 1, wherein the abrasive particles have a density of at least 3.7 g/cm³ and a hardness of at least 19 GPa.

6. Abrasive particles according to claim 1, wherein each abrasive particle contains less than 0.1 percent by weight of rare earth oxide.

7. A method of abrading a workpiece, the method comprising:
frictionally contacting abrasive particles according to any one of claims 1 to 6 with a surface of the workpiece, and
moving at least one of the abrasive particles and the surface of the workpiece relative to the other to abrade at least a portion of the surface of the workpiece.

8. An abrasive article comprising the abrasive particles of any one of claims 1 to 6 retained in a binder material.

9. An abrasive article according to claim 8, wherein the binder material is disposed on a substrate.

10. An abrasive article according to claim 8, wherein the abrasive article comprises an abrasive layer comprising the abrasive particles and the binder material secured to a major surface of a backing, and wherein the abrasive layer comprises a make coat and a size coat.

11. An abrasive article according to claim 9, wherein the substrate comprises a lofty open nonwoven fiber web.

12. An abrasive article according to claim 8, wherein the abrasive article comprises a bonded abrasive article.

13. A method of making abrasive particles, the method comprising:
providing a dispersion comprising an alumina precursor material, wherein the alumina precursor material comprises:
aluminum ions;
at least one first divalent cation selected from the group consisting of Sr, and Ba; and
at least one second divalent cation selected from the group consisting of Mg, Co, Ni, and Zn;
combining seed particles with the dispersion, wherein the seed particles comprise a nucleating agent or a precursor thereof that facilitates conversion of the alumina precursor material to alpha-alumina;
converting the dispersion to abrasive precursor particles; and
sintering the abrasive precursor particles to provide the abrasive particles, wherein each of the abrasive particles comprises an alpha-alumina crystalline phase and from 0.25 to 20 percent by weight of a beta-alumina crystalline phase, based on the total weight of the alpha-alumina crystalline phase and the beta-alumina crystalline phase combined.

14. A method according to claim 13, wherein each of the abrasive particles comprises less than 10 percent by weight of magnetoplumbite crystalline phases.

15. A method according to claim 13, wherein the beta-alumina crystalline phase is represented by the empirical formula XQAl₁₀O₁₇, wherein:
X represents the first divalent cations and is selected from the group consisting of Sr, Ba; and
Q represents the second divalent cations and is selected from the group consisting of Mg, Co, Ni, Zn and combinations thereof.

## Patentansprüche

1. Schleifteilchen, wobei jedes der Schleifteilchen eine kristalline alpha-Aluminiumoxidphase und von 0,25 bis 20 Gew.-% einer kristallinen beta-Aluminiumoxidphase, bezogen auf das Gesamtgewicht der kombinierten kristallinen alpha-Aluminiumoxidphase und der kristallinen beta-Aluminiumoxidphase, umfasst, wobei die kristalline beta-Aluminiumoxidphase durch die empirische Formel XQAl₁₀O₁₇ dargestellt ist, wobei:
X aus der Gruppe bestehend aus Sr und Ba ausgewählt ist; und
Q aus der Gruppe bestehend aus Mg, Co, Ni und Zn ausgewählt ist.

2. Schleifteilchen nach Anspruch 1, wobei jedes der Schleifteilchen weniger als 10 Gew.-% kristalline Magnetoplumbitphasen umfasst.

3. Schleifteilchen nach Anspruch 1, wobei die Schleifteilchen von 0,04 bis 2,60 Gew.-% XO und von 0,01 bis 4,5 Gew.-% QO umfassen.

4. Schleifteilchen nach Anspruch 1, wobei die Schleifteilchen Impfteilchen umfassen, die aus der Gruppe bestehend aus alpha-Aluminiumoxid, Eisenoxid und Vorläufern davon, und Chromoxid und Vorläufern davon ausgewählt sind.

5. Schleifteilchen nach Anspruch 1, wobei die Schleifteilchen eine Dichte von mindestens 3,7 g/cm³ und eine Härte von mindestens 19 GPa aufweisen.

6. Schleifteilchen nach Anspruch 1, wobei jedes Schleifteilchen zu weniger als 0,1 Gew.-% Seltenerdoxid enthält.

7. Ein Verfahren zum Schleifen eines Werkstücks, wobei das Verfahren umfasst:
Reibkontaktieren von Schleifteilchen nach einem der Ansprüche 1 bis 6 mit einer Oberfläche des Werkstücks, und
Bewegen von mindestens einem der Schleifteilchen und der Oberfläche des Werkstücks relativ zueinander, um mindestens einen Abschnitt der Oberfläche des Werkstücks zu schleifen.

8. Ein Schleifgegenstand, umfassend die Schleifteilchen nach einem der Ansprüche 1 bis 6, die in einem Bindemittelmaterial gehalten werden.

9. Ein Schleifgegenstand nach Anspruch 8, wobei das Bindemittelmaterial auf einem Substrat angeordnet ist.

10. Ein Schleifgegenstand nach Anspruch 8, wobei der Schleifgegenstand eine Schleifschicht umfasst, die die Schleifteilchen und das Bindemittelmaterial umfasst, die an einer Hauptfläche eines Trägers befestigt sind, und wobei die Schleifschicht eine Bindemittelschicht und eine Deckschicht umfasst.

11. Ein Schleifgegenstand nach Anspruch 9, wobei das Substrat eine lockere, offene Vliesfaserbahn umfasst.

12. Ein Schleifgegenstand nach Anspruch 8, wobei der Schleifgegenstand einen gebundenen Schleifgegenstand umfasst.

13. Ein Verfahren zum Herstellen von Schleifteilchen, wobei das Verfahren umfasst:
Bereitstellen einer Dispersion, die ein Aluminiumoxidvorläufermaterial umfasst, wobei das Aluminiumoxidvorläufermaterial umfasst:
Aluminiumionen;
mindestens ein erstes zweiwertiges Kation, ausgewählt aus der Gruppe bestehend aus Sr und Ba; und
mindestens ein zweites zweiwertiges Kation, ausgewählt aus der Gruppe bestehend aus Mg, Co, Ni und Zn;
Kombinieren von Impfteilchen mit der Dispersion, wobei die Impfteilchen ein Nukleierungsmittel oder einen Vorläufer davon umfassen, der die Umwandlung des Aluminiumoxidvorläufermaterials zu alpha-Aluminiumoxid erleichtert;
Umwandeln der Dispersion in Vorläuferschleifteilchen; und
Sintern der Vorläuferschleifteilchen, um die Schleifteilchen bereitzustellen, wobei jedes der Schleifteilchen eine kristalline alpha-Aluminiumoxidphase und von 0,25 bis 20 Gew.-% einer kristallinen beta-Aluminiumoxidphase, bezogen auf das Gesamtgewicht der kombinierten kristallinen alpha-Aluminiumoxidphase und kristallinen beta-Aluminiumoxidphase, umfasst.

14. Ein Verfahren nach Anspruch 13, wobei jedes der Schleifteilchen zu weniger als 10 Gew.-% kristalline Magnetoplumbitphasen umfasst.

15. Ein Verfahren nach Anspruch 13, wobei die kristalline beta-Aluminiumoxidphase durch die empirische Formel XOPAl₁₀O₁₇ dargestellt wird, wobei:
X die ersten zweiwertigen Kationen darstellt und aus der Gruppe bestehend aus Sr, Ba ausgewählt ist; und
Q die zweiten zweiwertigen Kationen darstellt und aus der Gruppe bestehend aus Mg, Co, Ni, Zn und Kombinationen davon ausgewählt ist.

## Revendications

1. Particules abrasives, dans lesquelles chacune des particules abrasives comprend une phase cristalline alpha-alumine et de 0,25 à 20 pour cent en poids d'une phase cristalline bêta-alumine, sur la base du poids total de la phase cristalline alpha-alumine et de la phase cristalline bêta-alumine combinées, dans lesquelles la phase cristalline bêta-alumine est représentée par la formule empirique XQAl₁₀O₁₇, dans lesquelles :
X est choisi dans le groupe constitué de Sr et Ba ; et
Q est choisi dans le groupe constitué de Mg, Co, Ni et Zn.

2. Particules abrasives selon la revendication 1, dans lesquelles chacune des particules abrasives comprend moins de 10 pour cent en poids de phases cristallines magnétoplumbite.

3. Particules abrasives selon la revendication 1, dans lesquelles les particules abrasives comprennent de 0,04 à 2,60 pour cent en poids de XO, et de 0,01 à 4,5 pour cent en poids de QO.

4. Particules abrasives selon la revendication 1, dans lesquelles les particules abrasives comprennent des particules d'ensemencement choisies dans le groupe constitué d'alpha-alumine, oxyde de fer et précurseurs de celui-ci, et oxyde de chrome et précurseurs de celui-ci.

5. Particules abrasives selon la revendication 1, dans lesquelles les particules abrasives ont une masse volumique d'au moins 3,7 g/cm³ et une dureté d'au moins 19 GPa.

6. Particules abrasives selon la revendication 1, dans lesquelles chaque particule abrasive contient moins de 0,1 pour cent en poids d'un oxyde de terre rare.

7. Procédé d'abrasion d'une pièce à usiner, le procédé comprenant :
la mise en contact par frottement de particules abrasives selon l'une quelconque des revendications 1 à 6 avec une surface de la pièce à usiner, et
le déplacement d'au moins l'une parmi les particules abrasives et la surface de la pièce à usiner par rapport à l'autre pour abraser au moins une partie de la surface de la pièce à usiner.

8. Article abrasif comprenant les particules abrasives selon l'une quelconque des revendications 1 à 6, retenues dans un matériau liant.

9. Article abrasif selon la revendication 8, dans lequel le matériau liant est disposé sur un substrat.

10. Article abrasif selon la revendication 8, dans lequel l'article abrasif comprend une couche abrasive comprenant les particules abrasives et le matériau liant fixés à une surface principale d'un support, et dans lequel la couche abrasive comprend une couche de formation et une couche d'apprêt.

11. Article abrasif selon la revendication 9, dans lequel le substrat comprend une toile de fibres non tissées ouverte lâche.

12. Article abrasif selon la revendication 8, dans lequel l'article abrasif comprend un article abrasif lié.

13. Procédé de fabrication de particules abrasives, le procédé comprenant :
la fourniture d'une dispersion comprenant un matériau précurseur d'alumine, dans lequel le matériau précurseur d'alumine comprend :
des ions aluminium ;
au moins un premier cation divalent choisi dans le groupe constitué de Sr et Ba ; et
au moins un deuxième cation divalent choisi dans le groupe constitué de Mg, Co, Ni et Zn ;
la combinaison de particules d'ensemencement avec la dispersion, dans lequel les particules d'ensemencement comprennent un agent nucléant ou un précurseur de celui-ci, qui facilite une conversion du matériau précurseur d'alumine en alpha-alumine ;
la conversion de la dispersion en particules de précurseur abrasives ; et
le frittage des particules de précurseur abrasives pour fournir les particules abrasives, dans lequel chacune des particules abrasives comprend une phase cristalline alpha-alumine et de 0,25 à 20 pour cent en poids d'une phase cristalline bêta-alumine, sur la base du poids total de la phase cristalline alpha-alumine et de la phase cristalline bêta-alumine combinées.

14. Procédé selon la revendication 13, dans lequel chacune des particules abrasives comprend moins de 10 pour cent en poids de phases cristallines magnétoplumbite.

15. Procédé selon la revendication 13, dans lequel la phase cristalline bêta-alumine est représentée par la formule empirique XQAl₁₀O₁₇, dans lequel :
X représente les premiers cations divalents et est choisi dans le groupe constitué de Sr, Ba ; et
Q représente les deuxièmes cations divalents et est choisi dans le groupe constitué de Mg, Co, Ni, Zn et des combinaisons de ceux-ci.
